# EUROPÄISCHE PATENTSCHRIFT

(11) **EP 2 625 124 B1**
(45) Veröffentlichungstag und Bekanntmachung des Hinweises auf die Patenterteilung: **10.12.2014**
(21) Anmeldenummer: 10766258.7
(22) Anmeldetag: 05.10.2010
(51) Int. Cl.: B65G 67/22, B65G 63/02, B65G 63/00, B61D 47/00

(54) **MODULARE CONTAINERUMSCHLAGEINRICHTUNG**
MODULAR CONTAINER TRANSFER APPARATUS
APPAREIL MODULAIRE POUR LE TRANFERT DE CONTENEURS

(43) Veröffentlichungstag der Anmeldung: 14.08.2013
(73) Patentinhaber: Edag Production Solutions Gmbh & Co. Kg, 36039 Fulda (DE)
(72) Erfinder: GROHMANN, Jürgen, 88719 Stetten (DE); ZIEGLER, Felix, 88048 Friedrichshafen (DE); SCHAAFHAUSEN, Wilfried, 88045 Friedrichshafen (DE)
(74) Vertreter: Schwabe - Sandmair - Marx
(86) Internationale Anmeldenummer: PCT/EP2010/064861
(87) Internationale Veröffentlichungsnummer: WO 2012/045336

(56) Entgegenhaltungen:
- WO-A2-2010/071912
- DE-A1- 19 740 557
- DE-U1- 20 013 245
- US-A- 4 059 194
- US-A- 4 065 006
- US-A- 4 973 219

## Beschreibung

Die Erfindung betrifft eine modulare Containerumschlageinrichtung mit wenigstens einem ersten zentralen Modul und wenigstens einem optionalen zweiten Modul und wenigstens einem dritten Modul. In dem ersten Modul werden Container auf Schienenfahrzeugen umgeschlagen, das heißt Container von fahrenden Schienenfahrzeugen, zum Beispiel Güterzügen, entnommen und darauf abgesetzt. Mit dem zweiten Modul werden Häfen oder Flughäfen an das zentrale Modul angebunden, in dem dritten Modul werden Container auf Straßenfahrzeuge, beispielsweise LKW, verladen. Die modulare Umschlageinrichtung weist weiterhin wenigstens ein Zwischenlager im ersten zentralen Modul auf. Die Erfindung betrifft weiterhin ein Verfahren zum Be- und Entladen eines fahrenden Schienenfahrzeugs.

Logistikmanagement ist eine der großen Herausforderungen der Gegenwart. Um Containertransporte schnell und sicher von einem Ort zu einem anderen zu bringen, bedarf es ausgeklügelter Logistiksysteme, die die vorhandene Infrastruktur nutzen und strukturieren, um möglichst viele Warentransporte von der Straße auf die Schiene zu verlagern. Dabei ist den Marktteilnehmern besonders ein schneller und sicherer Transport wichtig, ohne unnötige Verzögerungen und vermeidbare Fehlleitungen. Gerade in Europa wird an länderübergreifenden Lösungen gearbeitet. So wurden zum Beispiel die Märkte für Dienstleistungen auf der Schiene in Europa geöffnet, auch wenn heute oft noch nationale Interessen einen wirklich freien Wettbewerb behindern.

Aus der US 7,753,637 B2 ist eine Lager- und Verteilungssystem für Container in einem Hafen bekannt. Die Container werden vom Schiff entladen und direkt in ein optimiertes Zwischenlager, zu einem anderen Schiff oder beispielsweise einem LKW transportiert, um zu vermeiden, dass ein Container mehrmals gegriffen werden muss und um den vorhandenen Lagerraum für Container optimal zu nutzen. Beim Transport der Container in das Lager werden diese automatisch gescannt und entsprechend des weiteren Transportwegs im Lager einsortiert.

Die DE 197 48 646 A1 beschreibt eine Containerumschlageinrichtung für ein Containerterminal, wobei die Transportmittel der zu be- bzw. entladenden Container mit geringer Geschwindigkeit an der stationären Containerumschlageinrichtung vorbeibewegt werden. Die Containerumschlagvorrichtung weist eine Greifeinrichtung zum Greifen der Container auf, die beim Be- und Entladevorgang einer Trajektorie gemäß einem Halbkreisbogen oder einer Trajektorie mit einer einer Halbellipse ähnlichen Form folgt. Die Geschwindigkeit der Greifeinrichtung wird zum Greifen oder Absetzen eines Containers auf dem fahrenden Transportmittel mit der Geschwindigkeit des Transportmittels und der Position des Containers auf dem Transportmittel bzw. der Absetzposition für den Container auf dem Transportmittel synchronisiert.

Die DE 43 32 232 C1 beschreibt eine Vorrichtung zum schnellen Umschlagen von Transportbehälter auf einem Zug, wobei der Zug zum Be- und Entladen stoppt und die Fahrleitung im Ladebereich entfernt wird. Nach Beendigung des Be- und Entladevorgangs kann die Fahrleitung wieder eingesetzt werden und der Zug fährt weiter.

Die US 4 065 006 A betrifft eine Containerumschlagsvorrichtung mit zwei Schienenkreisen, die nacheinander in Form einer Acht angeordnet sind und einer parallel zur Längsachse der Acht verlaufenden Schiene für einen Zug, der beim Passieren der Containerumschlagsvorrichtung be- und/oder entladenden werden soll. Auf den Schienen der Containerumschlagsvorrichtung bewegen sich angetriebene Wagen die mit einer Vorrichtung versehen sind, um in einem ersten Kreis der Acht Container auf den Zug abzunehmen und in dem zweiten Kreis der Acht Container auf den Zug aufzusetzen.

Die DE 197 40 557 A1 betrifft eine Verladestation für Güter zwischen Bahn und Straße und/oder Schiff. Die Verladestation weist einen zentralen Containerabstellplatz auf, der von einer Schiene umgeben ist. Ein Verladekran erstreckt sich vom Mittelpunkt des Abstellplatzes bis über die umlaufende Schiene und ist drehbar im Mittelpunkt und verfahrbar auf einem Schienenfahrzeug auf der umlaufenden Schiene abgestützt. Züge, Schiffe und/oder LKWs können so an der Verladestation vorbeigeführt werden, dass der Verladekran Container von dem jeweiligen Transportmittel abnehmen oder vom Containerbastellplatz aufnehmen und auf dem Containerabstellplatz abstellen oder auf einem der Transportmittel absetzen kann.

Die US 4 059 194 A betrifft eine Containerverladestation mit einem Transportkreis mit hintereinander in dem Transportkreis umlaufenden Greifern, die einen Container in einem Containerlager oder von einem Transportmittel greifen und auf einem Transportmittel oder im Containerlager absetzen können. Dieses Dokument offenbart eine Einrichtung gemäß dem Oberbegriff des Anspruchs 1.

Die WO 2010/071912 A2 betrifft eine Verfahren zum Um- oder Beladen von wenigstens einer Ladeeinheit, bei dem eine Ladeeinheit durch Verladehilfseinrichtungen und eine Verschiebeeinheit von einem Wagon auf eine parallel daneben angeordnete oder geparkte Ladebrücke von der Ladebrücke auf den Wagon verladen wird.

Die US 4 973 219 A betrifft ein Containerlager und ein gitterförmig angeordnetes Transportsystem für die Container, mit dem die Container von ihrem Lagerplatzt zu einem Verladekran transportiert werden können.

Die DE 200 13 245 U1 betrifft eine Einrichtung zum Umschlagen von Containern.

Allen Dokumenten ist gemeinsam, dass sie jeweils Lösungen für einen Verkehrsknoten in einem Logistiksystem für den Containertransport vorschlagen, zum Beispiel einen Hafen, einen Bahnhof oder eine Beladestation für LKW. Zudem werden in allen vorgeschlagenen System die Container entweder auf stehende Transportmittel geladen oder von einer stationären Be- und Entladeeinrichtung auf einem langsam bewegten Transportmittel abgesetzt bzw. von einem langsam bewegten Transportmittel abgenommen.

Es ist eine Aufgabe der Erfindung eine Umschlagvorrichtung zu schaffen, die unterschiedliche lokale Containerterminals oder Containerumschlageinrichtungen in ein Gesamtsystem einbindet und dabei einen schnelleren und effizienteren Umschlag der Container ermöglicht. Die Erfindung betrifft weiterhin ein Verfahren mit dem der Umschlag von Containern in einem Modul der Containerumschlageinrichtung beschleunigt werden kann.

Gelöst wird diese Aufgabe durch die modulare Containerumschlageinrichtung nach Anspruch 1 und dem Verfahren zum Be- und Entladen nach Anspruch 11.

Die Erfindung betrifft eine modulare Containerumschlageinrichtung mit wenigstens einem zentralen Modul zum Umschlagen von Containern auf Schienenfahrzeugen, zum Beispiel Güterzügen, und wenigstens einem Zwischenlager für die Container. Die Container werden in einer Be- und Entladestrecke von einem fahrenden Schienenfahrzeug entnommen und auf dem fahrenden Schienenfahrzeug abgesetzt. Die vom Schienenfahrzeug entnommenen Container können anschließend zu dem bzw. einem der Zwischenlager transportiert werden oder auf einem weiteren fahrenden Schienenfahrzeug abgesetzt werden. Die Umschlageinrichtung weist optional, je nach den gegebenen regionalen Verhältnissen, wenigstens ein Modul zum Umladen von Container von einem Schiff oder einem Flugzeug auf ein Schienenfahrzeug oder von einem Schienenfahrzeug in ein Schiff oder ein Flugzeug auf. Die Container werden zu dem bzw. einem der Zwischenlager transportiert oder von dem oder einem der Zwischenlager angeliefert. Die auf das Schienenfahrzeug verladenen Container können auch direkt in der Be- und Entladestrecke weiter umgeschlagen werden. Schließlich weist die Umschlageinrichtung wenigstens ein weiteres Modul auf, in dem die Container von dem oder einem der Zwischenlager auf Straßenfahrzeuge geladen bzw. Container von Straßenfahrzeugen an das bzw. eines der Zwischenlager übergeben werden.

Die Containerumschlageinrichtung mit ihren Modulen kann in einer Industrieregion gebildet sein, in einem Bundesland, einem Staat oder einer Staatengemeinschaft wie zum Beispiel der EU oder den USA. Die Module können auch über die ganze Welt verteilt sein und in ihrer Gesamtheit die Containerumschlageinrichtung bilden. Das Wort "ein" wird dort wo es nicht eindeutig als Zahlenwort erkennbar ist, im Sinne des allgemeinen Artikels benutzt, der die Anzahl des jeweiligen Gegenstands nicht auf einen Gegenstand begrenzt.

Die Be- und Entladestrecke des zentralen Systems wird von einem Zweikreissystem gebildet, mit einem ersten Kreis, der vom Zwischenlager über die Be- und Entladestrecke zurück in das Zwischenlager führt und in dem Container mittels angetriebener Greifeinrichtungen oder Spread Shuttle von dem fahrenden Schienenfahrzeug abgenommen werden können und einem zweiten Kreis, in dem Container in dem Zwischenlager von der Greifeinrichtung gegriffen, zu dem Schienenfahrzeug transportiert und dort abgesetzt werden können. Nach dem Absetzen der Container fahren die leeren Container des zweiten Kreises zurück in das Zwischenlager. Dabei kann jede der Greifeinrichtungen einen eigenen Antrieb aufweisen, der unabhängig von einem anderen der Antriebe betrieben werden kann, so dass jede der Greifeinrichtungen individuell im ersten oder zweiten Kreis bewegt werden kann.

Die Greifeinrichtung oder das Spread Shuttle müssen so konstruiert sein, dass sie Container unterschiedlicher Abmessungen greifen können, die Container wenigstens vor dem Absetzen zentrieren und eventuelle Bewegungen der Container dämpfen können. So kann eine Greifeinrichtungen aus einem Körper mit einem zentralen bevorzugt teleskopierbaren Längsbalken bestehen, dessen beide Enden mit je einem Führungsmittel, zum Beispiel mit je zwei Laufrollen verbunden sind, die auf der Laufschiene des entsprechenden Kreises laufen. Anstatt der Laufrollen können andere geeignete Führungsmittel eingesetzt werden, auch die Magnetschwebetechnik. Jedes der Führungsmittel weist bevorzugt je wenigstens einen Motor auf, von dem es angetrieben werden kann um die Greifeinrichtung auf der Laufschiene zu bewegen. Die Länge des zentralen Längsbalkens kann mittels der Antriebsmotoren auf unterschiedliche Containermaße eingestellt werden. Der Längsbalken nimmt die beim Transport und der Beschleunigung der Container auftretenden Biegemomente auf, so dass diese nicht auf die Laufschiene des Kreises übertragen werden. An seinen Enden kann der Längsbalken vier angetriebene oder ausklappbare gedämpfte Arme zum Greifen und zentrieren des Containers aufweisen. Die Zentrierung kann weiterhin durch feste oder gedämpfte Leitplanken unterstützt werden und gegen mit den Armen verbundene Rollen drücken.

Die Container können auf dem Schienenfahrzeug bzw. einem Wagon des Schienenfahrzeugs zum Beispiel mit bekannten Eckbeschlagkombinationen gesichert werden, die gelöst werden müssen, bevor der Container von dem Schienenfahrzeug abgenommen werden kann. Um sicher zu sein, dass der Container vom Schienenfahrzeug abgehoben werden kann, kann die Position der Eckbeschläge durch zum Beispiel einen optischen Sensor an der Greifeinrichtung kontrolliert werden. Die Eckbeschläge können dazu in einer Weise markiert sein, dass zweifelsfrei die Position des Eckbeschlags relativ zum Container bestimmbar ist. Diese Markierungen können zusätzlich benutzt werden, um die Greifeinrichtung mit dem Schienenfahrzeug zu synchronisieren. Die Container können auch mit einem Verriegelungsmechanismus auf dem Schienenfahrzeug gesichert sein, der zum Beispiel mittels mit der Greifeinrichtung verbundenen Ent- bzw. Verriegelungseinrichtungen betätigt werden kann. Alternativ kann die Entriegelung der Container beim Einfahren in die Be- und Entladestrecke vom Schienenfahrzeug aus oder von außerhalb des Schienenfahrzeugs, zum Beispiel einem Signalgeber am Anfang der Be- und Entladestrecke, bewirkt werden, die Verriegelung der Container auf dem Schienenfahrzeug am Ende der Be- und Entladestrecke.

Es ist auch möglich, die Container auf dem Schienenfahrzeug ohne Verriegelungsmechanismus mitzuführen. Sind die Container auf dem Schienenfahrzeug verriegelt, muss sichergestellt sein, dass die Verriegelung vollständig aufgehoben ist, bevor die Greifeinrichtung den Container relativ zu dem Schienenfahrzeug bewegt.

Bei dem Zwischenlager handelt es sich bevorzugt um ein Lager für Container, in dem die Container gelagert und sortiert werden können. Die Sortieranlage kann mehrere Sortierslots aufweisen, in denen Container für die Abholung durch die Greifeinrichtungen bereit gestellt werden können und in die vom Schienenfahrzeug entnommene Container abgesetzt werden können. Das anschließende Sortieren im Lager erfolgt auf bekannte Weise und muss hier nicht ausführlich beschrieben werden. In dem Zwischenlager können die Container dann bereit gestellt werden, um in einer geforderten Reihenfolge auf ein anderes Schienenfahrzeug oder ein Straßenfahrzeug verladen zu werden.

Bevorzugt werden die Greifeinrichtungen des ersten Kreises im Zwischenlager in einer Stand by Position gehalten, aus der heraus sie aus dem Stillestand beschleunigen, sobald sie ein entsprechendes Signal von bevorzugt einer zentralen Steuerung wenigstens des zentralen Moduls, bevorzugt der Umschlageinrichtung bekommen. Das Signal beinhaltet wenigstens die Informationen, an welcher Position von dem heranfahrenden Zug der Container entnommen werden muss. Muss zum Beispiel nur der erste und der letzte Container eines herannahenden Zuges entnommen werden, so können die Greifeinrichtungen gleichzeitig gestartet aber mit unterschiedlicher Beschleunigung an das fahrende Schienenfahrzeug herangeführt werden, alternativ können die beiden Greifeinrichtungen zeitlich beabstandet gestartet werden, bei gleicher Beschleunigung.

Alternativ können die Greifeinrichtungen auch mittels eines Schleppzugs, zum Beispiel einer Kette im ersten und zweiten Kreis geführt werden. Diese Kette kann aus Gliedern bestehen, die jeweils der Länge zum Beispiel eines Wagons des Schienenfahrzeugs entsprechen. Innerhalb des Gliedes kann die Greifeinrichtung sich bewegen, so dass eine Feinjustierung der Greifeinrichtung zu dem jeweiligen Container oder einem Containerabsetzplatz möglich ist. In Vorbereitung auf den Umschlag der Container eines anfahrenden Schienenfahrzeuges können dann Greifeinrichtungen nur in die Kettenglieder eingegeben werden, die in der Be- und Entladestrecke neben einem abzunehmenden Container liegen werden. Das heißt, die Kette muss angesteuert, beschleunigt und mit der Geschwindigkeit des Zuges synchronisiert werden, so dass die in der Kette befindlichen Greifeinrichtungen an der vorgegebenen Position neben dem Schienenfahrzeug durch die Be- und Entladestrecke fahren.

Die jeweilige Position des abzunehmenden Containers auf dem Schienenfahrzeug kann durch ein zentrales Frachtmanagementsystem an das zentrale Modul gemeldet werden und stellt einen Soll-Wert da. Vor der endgültigen Zusammenstellung der Greifeinrichtungen kann die tatsächliche Containerverteilung auf dem Schienenfahrzeug, der Ist-Wert, nochmals gescannt werden. Dies kann beispielsweise optisch über Lichtschranken oder Laserscanner erfolgen, oder mittels Ultraschall, Radar oder andere bekannter Scaneinrichtungen. Der Ist-Wert kann dann mit dem Soll-Wert verglichen werden, eventuelle Korrekturen können beim Zusammenstellen des Greifeinrichtung-Zuges für das herannahende Schienenfahrzeug Berücksichtigung finden.

Auch die Geschwindigkeit des heranfahrenden Zuges kann so gemessen werden, um den Greifeinrichtungen eine Zielgeschwindigkeit vorzugeben. Bevorzugt werden während der Synchronisation der Greifeinrichtungen mit dem Schienenfahrzeug mehrere Messungen durchgeführt, bis gleiche Geschwindigkeiten der beiden Komponenten hergestellt sind. Weitere Messungen können innerhalb der Be- und Entladestrecke zur Kontrolle der Geschwindigkeiten vorgesehen sein. Insbesondere kann die Geschwindigkeit der Greifeinrichtungen zu dem Schienenfahrzeug permanent synchronisiert werden, um ein sicheres Abnehmen und Aufsetzen der Container auf dem Schienenfahrzeug zu gewährleisten, wenn sich die Geschwindigkeit des Schienenfahrzeugs auf der Be- und Entladestrecke ändert.

Nach dem Absetzen des Containers kann zum Beispiel durch optische Kontrolle der Verriegelungseinrichtung, zum Beispiel der weiter oben erwähnten Eckbeschläge oder durch Positionsmessungen kontrolliert werden, ob der Container richtig auf dem Schienenfahrzeug abgesetzt wurde. Alternativ können hierzu auch Kontaktsensoren oder andere Sensoren auf dem Schienenfahrzeug verwendet werden. Da der Container in der Regel auf dem Schienenfahrzeug in seiner Position verriegelt wird, kann eine erfolgreiche Verriegelung ebenfalls eine Bestätigung für ein sicheres Absetzen des Containers auf dem Schienenfahrzeug sein.

Schließlich muss auch ein Crash- bzw. Fehlermanagement Bestandteil solch eines Moduls sein, um zum Beispiel das Einfahren eines Schienenfahrzeugs zu verzögern oder zu verhindern, wenn durch einen Zwischenfall im Zwischenlager die geplanten Container nicht rechtzeitig zusammengestellt werden können. Dazu können im Vorfeld der Be- und Entladestrecke Parkgleise für Schienenfahrzeuge vorgesehen sein. Bei einem Zwischenfall am fahrenden Schienenfahrzeug in der Be- und Entladestrecke können zum Beispiel alle Greifeinrichtungen automatisch zurück in ihre Positionen neben dem Schienenfahrzeug fahren und falls nötig durch einen Notstopp angehalten werden. Je nach Zwischenfall gibt es angepasste Lösungen, die dem Sicherheitsfachmann für bewegte Systeme bekannt sind und daher hier nicht im Einzelnen behandelt werden müssen.

Wenn es auch bevorzugt ist, dass die Greifeinrichtungen im Zwischenlager ihre Stand by Position haben, so können sie auch in einem Abschnitt zwischen dem Zwischenlager und der Be- und Entladestrecke bereitgestellt werden und von dort aus beschleunigt werden. Denkbar ist auch, dass die Stand by Position nicht Teil des ersten Kreises ist, sondern das die Greifeinrichtungen bei Bedarf aus einer Greifeinrichtungsbereitstellungseinheit außerhalb des ersten Kreises über eine erste Weiche in den ersten Kreis einfahren und nach Beendigung ihrer Aufgabe über eine zweite Weiche aus dem ersten Kreis zurück in die Greifeinrichtungsbereitstellungseinheit fahren. Dies kann den Vorteil haben, dass Greifeinrichtungen die defekt sind oder einer routinemäßigen Inspektion zugeführt werden müssen, in der separaten Greifeinrichtungsbereitstellungseinheit beim Überfahren der zweiten Weiche aussortiert werden können, ohne den Betrieb des ersten Kreises zu stören oder aufzuhalten. Weichen zum Ein- und Ausschleusen von Greifeinrichtungen können auch im ersten Kreis vorgesehen sein, so dass defekte bzw. reparierte Greifeinrichtungen im Betrieb in den ersten Kreis ein- und aus diesem herausgeführt werden können.

Der zweite Kreis des Zweikreissystems kann wie der erste Kreis Greifeinrichtungen oder Spread Shuttle vom Zwischenlager über die Be- und Entladestrecke zurück ins Zwischenlager führen. Im Gegensatz zu den Greifeinrichtungen des ersten Kreises greifen die Greifeinrichtungen des zweiten Kreises im Zwischenlager bereitgestellte Container und transportieren diese zum fahrenden Schienenfahrzeug, um sie auf diesem abzusetzen. Die Stand by Position für die Greifeinrichtungen in dem zweiten Kreis liegt bevorzugt vor der Aufnahmeposition für die Container durch die Greifeinrichtungen. Durch Signale erhalten die Greifeinrichtungen die Informationen an welcher Bereitstellungsposition sie einen Container greifen und an welcher Stelle auf dem fahrenden Zug sie den Container absetzen sollen. Auch der zweite Kreis kann Weichen zum Ein- und Auskoppeln von Greifeinrichtungen aufweisen, auch die zweiten Greifeinrichtungen können ihre Stand by Position außerhalb des zweiten Kreises haben. Des Weiteren können der erste und der zweite Kreis miteinander verbunden sein, so dass leere Greifeinrichtungen zwischen dem ersten Kreis und dem zweiten Kreis ausgetauscht werden können. Schließlich können die Greifeinrichtungen aus einem zentralen Bereitstellungsraum wahlweise in den ersten Kreis oder den zweiten Kreis eingeschleust werden und aus dem ersten Kreis und dem zweiten Kreis zurück in den zentralen Bereitstellungsraum geleitet werden.

Der erste Kreis, in dem die leeren Greifeinrichtungen zum Greifen von Containern auf dem fahrenden Schienenfahrzeug laufen, verläuft im Bereich der Be- und Entladestrecke parallel zum fahrenden Schienenfahrzeug auf einer Seite, der zweite Kreis parallel zum fahrenden Schienenfahrzeug auf einer bezüglich der Schienenfahrzeugachse gegenüberliegenden Seite. Mit anderen Worten im Bereich der Be- und Entladestrecke fährt das Schienenfahrzeug in einem Bereich zwischen dem ersten und dem zweiten Kreis, und die Container, die sich beim Einfahren in die Be- und Entladestrecke auf dem Schienenfahrzeug befinden, werden auf der Seite des ersten Kreises vom Schienenfahrzeug abgenommen und auf dem Schienenfahrzeug abzusetzende Container werden von der Seite des zweiten Kreises auf dem Schienenfahrzeug abgesetzt.

Dazu können sie leeren Greifeinrichtungen des ersten Kreises sich zunächst in eine Position neben dem fahrenden Schienenfahrzeug bewegen, an der ein vom Schienenfahrzeug abzunehmender Container sitzt. Auf dem Weg in diese Position kann die Greifeinrichtung ihre Geschwindigkeit mit der Geschwindigkeit des Schienenfahrzeugs synchronisieren, so dass die Greifeinrichtung beim Erreichen seiner Position parallel zu dem zu greifenden Container die gleiche Geschwindigkeit aufweist, wie das Schienenfahrzeug. Das heißt, das System Schienenfahrzeug - Greifeinrichtung bewegen sich relativ zueinander nicht. Auch die Greifeinrichtungen mit den gegriffenen Containern nehmen ihre Position neben den vorgegebenen Absatzpositionen auf dem Schienenfahrzeug ein und synchronisieren ihre Geschwindigkeit mit der Geschwindigkeit des Schienenfahrzeugs.

Sobald die Greifeinrichtungen sich in ihrer jeweiligen Greif- bzw. Absetzposition befinden und die Geschwindigkeiten der Greifeinrichtungen identisch sind mit der Geschwindigkeit des Schienenfahrzeugs, können sich die leeren Greifeinrichtungen quer zur Fahrtrichtung des Schienenfahrzeugs über den zu greifenden Container bewegen, diesen greifen, eventuell anheben und sich dann zurück in die Ausgangsposition, das heißt, die ursprüngliche Greifposition, quer zum Schienenfahrzeug bewegen. Auch die Container tragenden Greifeinrichtungen des zweiten Kreises können sich zum Absetzen der Container quer zur Fahrtrichtung des Schienenfahrzeugs über das Schienenfahrzeug bzw. über den Absetzplatz für den Container auf dem Schienenfahrzeug bewegen, den Container eventuell absenken, von Container entkoppeln und sich zurück in die Ausgangsposition bewegen.

Dabei können gleichzeitig Container von den Greifeinrichtungen des ersten Kreises gegriffen und Greifeinrichtungen des zweiten Kreises auf leeren Absetzplätzen auf dem Schienenfahrzeug abgesetzt werden. Während die Greifeinrichtungen des ersten Kreises den jeweiligen Container greifen können, sobald sie ihre Greifposition erreicht haben, können die Greifeinrichtungen des zweiten Kreises nur die Container sofort absetzen, die auf Absetzplätze kommen, die bereits leer waren, als das Schienenfahrzeug in die Be- und Entladestrecke einfuhr. Soll der Container auf einer Absetzstelle abgesetzt werden, die mit einem Container besetzt ist, der in der Be- und Entladestrecke von einer Greifeinrichtung des ersten Kreises erst vom Schienenfahrzeug abgenommen wird, müssen das Abnehmen und das Absetzen koordiniert verlaufen, um einen Zusammenstoß der Container zu vermeiden.

Bevorzugt werden die Greifeinrichtungen nicht aktiv über das Schienenfahrzeug bewegt, in dem Sinne, dass die Greifeinrichtungen aus einer Position neben dem Schienenfahrzeug an beliebiger Position sich quer zum Schienenfahrzeug bewegen können, wodurch das beschriebene gleichzeitige Aufnehmen und Absetzen von Containern von bzw. auf dem Schienenfahrzeug erst möglich ist Vielmehr wird der erste Kreis insgesamt in einem Entladeabschnitt der Be- und Entladestrecke zwangsweise in eine Position relativ zum Schienenfahrzeug bewegt, in der die leeren Greifeinrichtung sich über einem Container in einer Greifposition befindet. Das heißt, die Greifeinrichtungen werden im ersten Kreis über die Container geführt, ohne dass sich die Greifeinrichtung relativ zur Laufschiene des ersten Kreises bewegt. Nach der Übernahme des Containers führt der erste Kreis die Greifeinrichtungen wieder in eine Position neben dem Schienenfahrzeug. Gleichzeitig wird der zweite Kreis wie vorbeschrieben über das Schienenfahrzeug geleitet, so dass die abzusetzenden Container über die Absetzposition bewegt werden. Das heißt, dass in der Be- und Entladestrecke in der die Kreise die Greifeinrichtungen über das Schienenfahrzeug bewegen immer die Entladestrecke für die Container in Fahrtrichtung des Schienenfahrzeugs vor der Beladestrecke für die Container liegen muss. Dabei ist der Übergang zwischen der Entladestrecke und der Beladestrecke bevorzugt kontinuierlich, das heißt, während der von der Greifeinrichtung des ersten Kreise gegriffene Container quer zur Fahrtrichtung des Schienenfahrzeugs neben das Schienenfahrzeug geführt wird, kann gleichzeitig der Container, der auf den gleichen Platz auf dem Schienenfahrzeug abgesetzt werden soll, quer zur Fahrtrichtung des Schienenfahrzeugs über das Schienenfahrzeug geführt werden. Auch auf leer in die Be- und Entladestrecke einfahrende Absetzplätze auf dem Schienenfahrzeug können nur innerhalb des Beladeabschnitts Container abgesetzt werden.

Wie beschrieben, ist es eine Möglichkeit, dass die Greifeinrichtungen hergerichtet sind, um die Container über dem Schienenfahrzeug anzuheben und/oder abzusenken. Das heißt, die Greifeinrichtungen müssen entweder insgesamt oder zumindest mit den Greifelementen für den Container vertikal bewegt werden können. Dazu müssen die Greifelemente einen entsprechenden bevorzugt elektrischen oder hydraulischen Antrieb aufweisen, der ausgelegt sein muss, das maximale Gewicht eines beladenen Containers senkrecht zur Bewegungsebene zu heben und/oder zu senken. Alternativ könnten auch die Lagerflächen für die Container auf dem Schienenfahrzeug senkrecht zur Auflagefläche der Container bewegbar sein, wodurch die Container zur Verbindung mit einer Greifeinrichtung des ersten Kreise angehoben werden könnten, um ein Koppeln der Greifeinrichtung mit dem Container zu bewirken, bzw. abgesenkt werden könnten, um den Container von einem Greifer des zweiten Kreises zu trennen.

Eine weitere Alternative wäre das Gelände in der Be- und Entladestrecke so zu modulieren, dass das Schienenfahrzeug eine Art Berg und Tallandschaft durchfährt, während sich die Greifeinrichtungen auf einer Geraden bewegen. Die Container könnten dann an einem Maximum des Geländes, das heißt an einer Stelle, an der der Abstand zwischen Containeroberseite und der Greifeinrichtung minimal ist, von einer Greifeinrichtung des ersten Kreise gegriffen bzw. von einer Greifeinrichtung des zweiten Kreises auf das Schienenfahrzeug gesetzt werden. Beim Erreichen eines Minimums des Geländes können dann die mit einer Greifeinrichtung des ersten Kreises gegriffenen Container quer zum Fahrtrichtung abgenommen und neben das Schienenfahrzeug bewegt werden bzw. die leeren Greifeinrichtung des zweiten Kreises quer zur Fahrtrichtung zurück neben das Schienenfahrzeug bewegt werden. Das heißt, statt einer angetriebenen Bewegung der Greifeinrichtung oder der Haltepositionen der Container wird das Schienenfahrzeug durch das modulierte Gelände nacheinander in erste und zweite Positionen bewegt, in denen die Container vom Schienenfahrzeug abgenommen und auf dem Schienenfahrzeug platziert werden können.

Eine weitere Möglichkeit wäre, die Container auf dem Schienenfahrzeug auf Rollen mit einer Rotationsachse parallel zur Fahrtrichtung des Schienenfahrzeugs zu lagern, so dass sie ohne angehoben oder abgesetzt zu werden, quer zur Fahrtrichtung des Schienenfahrzeuge von diesen gezogen oder auf dieses geschoben werden können. Die Rollen können drehangetrieben sein, um das Absetzen bzw. Abnehmen von Containern auf bzw. von dem Schienenfahrzeug zu unterstützen. Schließlich ist auch in einer weiteren Variante denkbar, das Schienenfahrzeug mit quer zur Fahrtrichtung verschiebbaren Containerplätzen auszurüsten, so dass die Container mit den Containerplätzen bzw. die leeren Containerplätze in der Be- und Entladestrecke quer zur Fahrtrichtung des Schienenfahrzeugs neben das Schienenfahrzeug bewegt werden können, wo dann die Container aufgenommen bzw. abgesetzt werden können.

Auch Kombinationen der vorbeschriebenen Verfahren von Be- und Entladungsmöglichkeiten von Containern in der Be- und Entladestrecke sind möglich. So kann zum Beispiel die modulierte Be- und Entladestrecke mit den seitlich vom Schienenfahrzeug ausfahrbaren Containerplätzen kombiniert werden, wodurch die Greifeinrichtungen allein den Transport der Container übernehmen müssen, die Greifeinrichtungen also keine Antrieb aufweisen müssen um quer zur Fahrtrichtung über das Schienenfahrzeug zu bewegen und auch keinen Antrieb zum Anheben oder Absenken der Container. Die Greifeinrichtungen müssen folglich maximal Antriebe aufweisen, um eine Feinjustierung der Container auf den Containerplätzen des Schienenfahrzeugs durchführen zu können.

Egal, welche dieser Lösungen umgesetzt wird, können die Greifeinrichtungen eingerichtet sein, um die Container insbesondere beim Absetzen, aber auch beim Aufnehmen in und gegen die Fahrtrichtung des Schienenfahrzeugs zu bewegen, um eine exakte Positionierung des Containers auf dem Containerplatz zu ermöglichen und zum Beispiel ein Verkanten der Container mit einer Befestigungsvorrichtung für die Container nach dem Lösen zu verhindern.

Das Umschlagen der Container wurde anhand eines zentralen Moduls mit einer Be- und Entladestrecke erläutert. Das Zweikreissystem kann aber auch aus mehreren ersten und zweiten Kreisen bestehen, die mehrere Be- und Entladestrecken bedienen. Dabei ist bevorzugt jeder Be- und Entladestrecke je ein erster Kreis und ein zweiter Kreis zugeordnet und es können Schienenfahrzeuge gleichzeitig in jeder der Be- und Entladestrecken be- und entladen werden.

Bei einem Zweikreissystem, bei dem der zweite Kreis auf einer anderen Seite des Schienenfahrzeugs verläuft als der erste Kreis, muss wenigstens einer der Kreise beim Übergang in und aus der Be- und Entladestrecke den Fahrtweg der Be- und Entladestrecke queren. Dazu muss der entsprechende Kreis bzw. die die Greifeinrichtungen tragenden und führenden Laufschienen im Bereich des Übergangs angehoben oder abgesenkt werden, so dass die leeren Greifeinrichtungen und die Greifeinrichtungen mit einem gegriffenen Container über das Schienenfahrzeug oder unter dem Schienenfahrzeug hindurch, neben das Schienenfahrzeug oder zurück in das Zwischenlager bewegt werden können. Wird der Weg über das Schienenfahrzeug gewählt, so können die angetriebenen Greifeinrichtungen in diesem Bereich beschleunigen, um eine Verringerung der Geschwindigkeit und damit das Auffahren nachfolgender Greifeinrichtungen zu vermeiden. Zum Überwinden der Steigung können die Greifeinrichtungen am Anfang der Steigung mit einer Schleppeinrichtung verbunden werden, die den Antrieb der Greifeinrichtungen an dieser Stelle unterstützt. Der Antrieb braucht dann nur ausgelegt sein, die Container in einer Ebene im Kreis zu bewegen, die zusätzliche Kraft um die Container im Kreis anzuheben, wird zumindest zu einem großen Teil von der Schleppeinrichtung übernommen.

Um auch bei schlechten Wetterbedingungen, wie zum Beispiel Sturm, Starkregen oder Schneefall ein sicheres Umschlagen der Container zu ermöglichen, kann es vorteilhaft sein, wenn die Be- und Entladestrecke überdacht und/oder seitlich mit Schutzwänden versehen ist.

Da während des Be- und Entladevorgangs der Fahrdraht einer Bewegung der Greifeinrichtungen quer zur Fahrtrichtung des Schienenfahrzeugs im Weg sein kann, kann der Fahrdraht im Bereich der Be- und Entladestrecke verschiebbar angeordnet sein, dass heißt, er kann bevorzugt in beide Richtungen aus einer Position, in der er mittig über dem Schienenfahrzeug verläuft, quer zur Fahrtrichtung um einen Weg verschoben werden, der bevorzugt maximal der halben Breite des Stromabnehmers des Schienenfahrzeugs, zum Beispiel einer E-Lok entspricht. Dabei wird der Fahrdraht in Abhängigkeit von den Bewegungen der Greifeinrichtungen quer zur Fahrtrichtung stets in die gleiche Richtung wie die Greifeinrichtung bewegt, zum Beispiel kann die Greifeinrichtung direkt die Verschiebung des Fahrdrahts bewirken.

Die Bereiche, in denen der Fahrdraht quer zum Stromabnehmer versetzt ist, können bauseitig auf der Be- und Entladestrecke vorgegeben sein, so dass diese in feste Abschnitte zum Abnehmen und daran anschließende Abschnitte zum Aufsetzen von Containern von bzw. auf das fahrende Schienenfahrzeug eingeteilt ist. Schließlich kann der Fahrdraht auch über Signale einer entsprechenden Steuereinheit quer zur Fahrrichtung verfahren werden. Dadurch können die Längen der Abschnitte in den Container vom Schienenfahrzeug angenommen bzw. auf das Schienenfahrzeug abgesetzt werden können individuell für jedes in die Be- und Entladestrecke einfahrende Schienenfahrzeug zum Beispiel in Abhängigkeit der Geschwindigkeit eingestellt werden.

Der Fahrdraht kann aber auch über die gesamte Länge der Be- und Entladestrecke neben die Schienen für das Schienenfahrzeug verlegt sein. Ein Trolley-System verbindet dann die Stromleitung mit dem Stromabnehmer des Schienenfahrzeugs. Das Trolley-System weist eine Laufschiene auf, auf der sich ein angetriebener Trolley, der den verlegten Fahrdraht mit dem Stromabnehmer des Schienenfahrzeugs verbindet, parallel zum Schienenfahrzeug in und gegen die Fahrtrichtung bewegen kann. Bei der Laufschiene kann es sich um jede bekannt Laufschienenkonstruktion handeln, beispielsweise um eine Doppelrohr-Schienenkonstruktion. Der Trolley ist mit einer Stromschiene verbunden, von der er den Strom für den Antrieb abgreift, und ragt von der Führungsschiene bis in die Mitte der Be- und Entladestrecke bzw. des Gleises der Be- und Entladestrecke bzw. des Schienenfahrzeugs ab. Der Trolley ist hergerichtet, um Strom des Fahrdrahtes auf den Stromabnehmer des Schienenfahrzeugs übertragen zu können.

Nähert sich ein Schienenfahrzeug der Be- und Entladestrecke so wartet der Trolley am Anfang der Be- und Entladestrecke bevorzugt in einem Bereich, in dem der Fahrdraht noch nicht verlegt wurde. Der Fahrdraht liegt zum Beispiel auf einer Oberseite des Trolleys und kann sich auf der Trolley-Oberseite quer zur Fahrtrichtung des Schienenfahrzeugs frei bewegen. Sobald das Schienenfahrzeug in die Be- und Entladestrecke einfährt beschleunigt der Trolley und synchronisiert seine Geschwindigkeit mit der Geschwindigkeit des Schienenfahrzeugs, wobei der Trolley möglichst immer in Kontakt mit dem Stromabnehmer des Schienenfahrzeugs steht. Während der Synchronisierungsphase oder spätestens am Ende der Synchronisierungsphase des Trolleys mit dem Schienenfahrzeug wird der Fahrdraht aus seiner Position zentral über dem Schienenfahrzeug durch entsprechende Umlenkmittel neben die Be- und Entladestrecke verlegt, wodurch er zum Beispiel auf der Oberfläche des Trolleys liegend von einer Position über dem Stromabnehmer in eine Position über die Führungsschiene für den Trolley bewegt wird, ohne dass dadurch die Stromzufuhr vom Fahrdraht zu dem Schienenfahrzeug unterbrochen wird. Die Auflage für den Fahrdraht auf dem Trolley kann in Richtung auf den Fahrdraht zum Beispiel durch die Geometrie des Trolleys oder mittels elastischer Elemente vorgespannt sein, so dass der Trolley bzw. die Oberfläche des Trolleys auf der der Fahrdraht aufliegt, immer Kontakt zu dem Fahrdraht hält. Das Ende des Trolley, das mit dem Stromabnehmer des Schienenfahrzeugs zusammenwirkt, ist bevorzugt so geformt, dass beim Übergang des Stromabnehmers vom Fahrdraht auf den Trolley und vom Trolley auf den Fahrdraht eine Beschädigung des Stromabnehmers ausgeschlossen ist. Am Ende der Be- und Entladestrecke wird der Fahrdraht auf dem Trolley wieder über den Stromabnehmer des Schienenfahrzeugs bewegt und der Trolley abgebremst, so dass die Verbindung zwischen Trolley und Stromabnehmer aufgehoben wird und der Stromabnehmer wieder direkten Kontakt zum Fahrdraht hat. Zum Schluss fährt der Trolley zurück in seiner Ausgangsposition und wartet auf das nächste Schienenfahrzeug.

Der Fahrdraht kann auch neben dem Schienenfahrzeug innerhalb einer Stromschiene für den Trooleyantrieb geführt oder mit der Stromschiene verbunden werden, um zu verhindern, dass eine Greifeinrichtung oder ein Container den Fahrdraht während des Umschlagens der Container berührt. Dabei kann der Fahrdraht am Beginn und am Ende der Be- und Entladestrecke gekappt und mit der Stromschiene verbunden werden, das heißt, die Funktion des Fahrdrahtes übernimmt auf der Be- und Entladestrecke die Stromschiene, die gleichzeitig auch den Strom für den Antrieb des Trolleys liefert. Die Stromschiene kann zum Beispiel in einem Bereich unterhalb der abzunehmenden oder aufzusetzenden Container oder oberhalb der Greifeinrichtungen verlaufen, so dass die Gefahr eines Konflikts reduziert oder ausgeschlossen ist. Der Trolleykörper kann dann die Stromschiene mit dem Stromabnehmer oder dem durch die Stromschiene gegen Berührung durch die Container geschützten Fahrdraht des Schienenfahrzeugs verbinden.

Das Trolley-System muss nicht synchron zu dem Schienenfahrzeug geführt werden, sondern kann in seiner Position verharren, bis es aufgrund einer auftretenden Situation benötigt wird, um das Schienenfahrzeug mit dem Fahrdraht zu verbinden, damit das Schienenfahrzeug mit Energie versorgt werden kann.

Auf der Be- und Entladestrecke kann der Fahrdraht auch komplett entfernt sein, so dass das Schienenfahrzeug ohne aktiven Antrieb durch die Be- und Entladestrecke rollt und erst nach Verlassen der Be- und Entladestrecke wieder mit einem Fahrdraht verbunden wird. Die Be-und Entladestrecke kann in diesem Bereich ein leichtes Gefälle aufweisen.

Das Trolley-System kann auch aus zwei Teilsystemen bestehen, wobei jedes der Teilsysteme je einen Trolley aufweist. Das erste Teilsystem ist im Bereich der Beladestrecke gebildet Der Trolley ist in diesem Bereich auf dem zweiten Kreis angeordnet, so dass die Greifeinrichtungen des ersten Kreises die Container greifen können, ohne mit dem Fahrdraht für das Schienenfahrzeug in Konflikt zu kommen. Das zweite Teilsystem ist im Bereich der der Entladestrecke gebildet, der Trolley entsprechend auf dem ersten Kreis angeordnet.

Alternativ wäre es auch möglich, den Fahrdraht nicht seitlich neben das Schienenfahrzeug zu verlegen, sondern den Fahrdraht anzuheben, so dass er über dem Schienenfahrzeug in einer Höhe geführt wird, in der er das Aufnehmen und Ansetzen von Containern von bzw. auf dem Schienenfahrzeug nicht behindert. In diesem Fall bewegt das Trolley-System den Trolley über dem Stromabnehmer des Schienenfahrzeugs.

In dem zweiten Modul zur Verladung von Containern aus einem Schiff auf ein Schienenfahrzeug, können die Container mittels eines Krans von dem Schiff entnommen werden und auf selbstfahrenden Untersätzen für die Container abgestellt werden. Diese bewegen sich dann zum Beispiel computergesteuert in eine Übergabestation, wo die Container in einer Zuführungsebene von Greifeinrichtungen gegriffen und auf einem bereit stehenden Schienenfahrzeug abgesetzt werden. Die Übergabestation kann so aufgebaut sein, dass die Greifeinrichtungen nach dem Absetzen des Containers auf dem Schienenfahrzeug in einem Elevator in eine zweite Ebene über der Zuführungsebene angehoben werden und in dieser Ebene zurück geführt werden, in einem weiteren Elevator wieder auf die Zuführungsebene abgesenkt werden, wo sie einen weiteren Container greifen können. Mit dem Schienenfahrzeug können die Container dann zu dem bzw. einem zentralen Modul fahren, wo sie wie oben beschrieben umgeschlagen werden können. Nicht ausgeschlossen ist, dass sich das Schienenfahrzeug, auf dem die Container aus dem Schiff abgesetzt werden während des Absetzens der Container auf dem Schienenfahrzeug in Bewegung befindet. Im umgekehrten Fall des Beladens von Schiffen können die Container von einem Schienenfahrzeug an die selbstfahrenden Untersätze übergeben und von diesen zum Schiff transportiert werden. Die Einbindung solch eines zweiten Moduls erlaubt es, die Container-Ladefläche im Hafengebiet drastisch zu reduzieren und dadurch eventuell weitere Liegeplätze für Schiffe im Hafen zu schaffen, so dass die Kapazität des Hafens dadurch erweitert werden kann.

Das zweite Modul kann auch einen Flughafen an die modulare Einrichtung anbinden. Im Wesentlichen gilt das zu dem Hafen gesagte auch für den Flughafen.

Schließlich werden in einem dritten Modul Container aus dem Zwischenlager oder im Hafen oder Flughafen auf Straßenfahrzeuge verladen, et vice versa. Auch hier besteht die Möglichkeit, dass die Container vom fahrenden Straßenfahrzeug abgenommen und auf dem fahrenden Straßenfahrzeug abgesetzt werden.

Die Erfindung umfasst auch das Verfahren zum Be- und Entladen eines fahrenden Schienenfahrzeugs, in und mit einer vorbeschriebenen Einrichtung, bei dem angetriebene leere Greifeinheiten entlang einer Be- und Entladestrecke parallel zu dem Schienenfahrzeug geführt und neben einem vom Schienenfahrzeug abzunehmenden Container bewegt werden, wobei die Geschwindigkeit der leeren Greifeinrichtungen mit der Geschwindigkeit des Schienenfahrzeugs synchronisiert wird. Des Weiteren werden angetriebene einen Container tragende Greifeinheiten entlang der Be- und Entladestrecke parallel zu dem fahrenden Schienenfahrzeug geführt und neben einen vom Schienenfahrzeug abzunehmenden Container oder eine leere Containeraufnahmeposition bewegt, wobei die Geschwindigkeit der den Container tragenden Greifeinrichtungen mit der Geschwindigkeit des Schienenfahrzeugs synchronisiert wird. Zum Greifen von auf dem Schienenfahrzeug befindlichen Containern werden die leeren Greifeinrichtungen quer zur Fahrtrichtung des Schienenfahrzeugs bewegt, die Container gegriffen und bevorzugt von einer Verbindung mit dem Schienenfahrzeug entkoppelt. Anschließend können die Container zum Beispiel angehoben werden und die Greifeinrichtung wird quer zur Fahrtrichtung des Schienenfahrzeugs zurück neben das Schienenfahrzeug in seine Ausgangsposition bewegt. Alternativ kann auch eine andere oben beschriebene Methode zum Aufsetzen und Abnehmen von Containern auf bzw. von dem Schienenfahrzeug ein Teil des Verfahrens sein. Die den Container tragende Greifeinrichtung wird quer zur Fahrtrichtung des Schienenfahrzeugs über eine leere Containeraufnahmeposition auf dem Schienenfahrzeug bewegt, auf dem leeren Platz abgesetzt und von der Greifeinrichtung frei gegeben bzw. getrennt. Danach kann der Container mit dem Schienenfahrzeug gekoppelt werden, während die Greifeinrichtung quer zur Fahrtrichtung des Schienenfahrzeugs zurück in seine Ausgangsposition bewegt wird. Die Koppelung des Containers mit dem Schienenfahrzeug kann auch erfolgen, bevor die Greifeinrichtung den Container frei gibt, ebenso können die Greifeinrichtungen nach dem Greifen bzw. Absetzen der Container bereits beschleunigt werden, so dass sie nicht exakt in ihre Ausgangsposition zurückbewegt werden.

Die leeren Greifeinrichtungen zur Aufnahme von Containern werden in einem ersten Kreis von einem Zwischenlager in die Be- und Entladestrecke auf einer ersten Seite des Schienenfahrzeugs parallel zum Schienenfahrzeug und nach der Aufnahme der Container in das Zwischenlager geführt. In einem zweiten Kreis werden die beladen Greifelemente mit den im Zwischenlager gegriffenen Containern zum Absetzen der Container vom Zwischenlager in die Be- und Entladestrecke auf einer anderen Seite des Schienenfahrzeugs geführt und nach dem Absetzen der Container auf dem Schienenfahrzeug leer zurück in das Zwischenlager bewegt.

Dabei können die Container zur Aufnahme durch die Greifelemente im Zwischenlager aus einer Lagerposition in eine Greifposition bewegt werden, in der die sich im zweiten Kreis bewegenden Greifeinheiten die Container greifen können.

Die Greifeinrichtungen des ersten und/oder des zweiten Kreises werden beim Einfahren und beim Ausfahren in bzw. aus der Be- und Entladestrecke so geführt, dass sie die Fahrtrichtung des Schienenfahrzeugs queren, zum Beispiel über das Schienenfahrzeug hinweg bewegt oder unter dem Schienenfahrzeug hindurch bewegt werden.

Weitere Vorteile und erfinderische Einzelheiten ergeben sich aus der nachfolgenden Beschreibung von Ausführungsbeispielen, in Verbindung mit den Unteransprüchen und aus den Figuren. Die Erfindung ist nicht auf die Ausführungsbeispiel beschränkt. Im Einzelnen zeigen:
- Figur 1: Gesamtansicht eines zentralen Moduls
- Figur 2: Be- und Entladestrecke in einer Detailansicht von oben
- Figur 3: Detailansicht eines Zwischenlagers mit LKW-Terminal
- Figur 4: Hafenmodul
- Figur 5: Detailansicht Elevator
- Figur 6: Trolley-System
- Figur 7: Greifeinrichtung

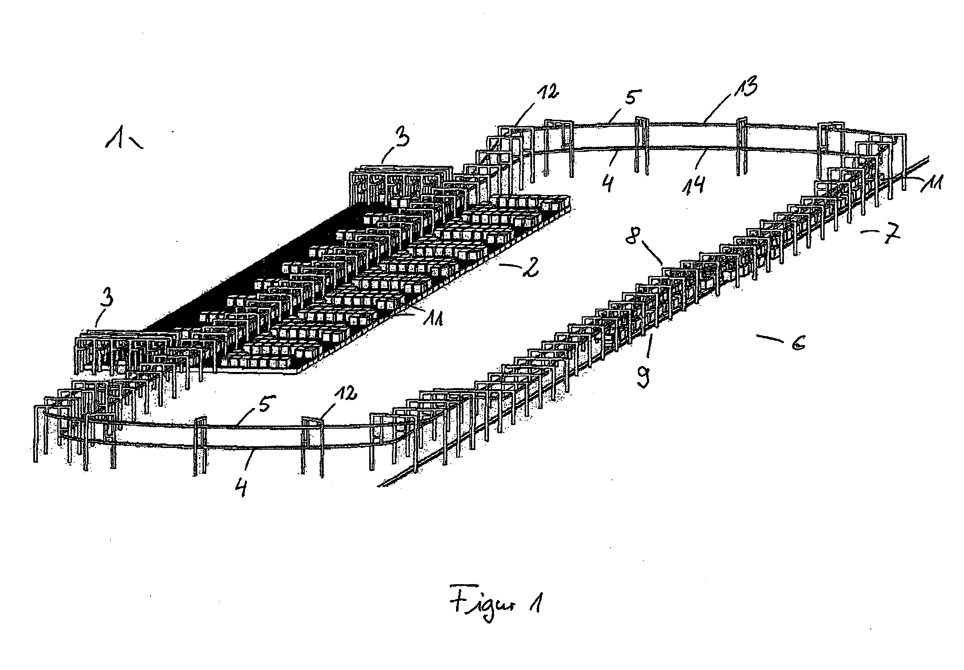

In der Figur 1 ist ein zentrales Modul 1 in einer Gesamtansicht gezeigt. Das zentrale Modul des Ausführungsbeispiels besteht aus ein Zwischenlager 2 mit einem LKW-Terminal 3, einem ersten Kreis 4 und einem zweiten Kreis 5 für Greifeinrichtungen 10 und einer Be- und Entladestrecke 6, die gerade von einem Schienenfahrzeug durchfahren wird.

Der erste und der zweite Kreis 4, 5 laufen vom Zwischenlager 2 über die Be- und Entladestrecke 6 zurück ins Zwischenlager. Beide Kreise 4, 5 sind Laufschienenkonstruktionen auf denen sich Greifeinrichtungen 10 bewegen können. Die Be-und Entladestrecke weist drei Abschnitte auf, einen Synchronisierungsabschnitt 7, einen Entladeabschnitt 8, in dem Container 11 von dem Schienenfahrzeug entnommen werden können, und einen Beladeabschnitt 9, in dem Container 11 auf dem Schienenfahrzeug abgesetzt werden können.

Im ersten Kreis 4 können leere Greifeinrichtungen 10 zur Be- und Entladestrecke 6 geführt werden, dort Container 11 von fahrenden Schienenfahrzeug abnehmen und anschließend in das Zwischenlager 2 transportieren. Im zweiten Kreis können Greifeinrichtungen 10 im Zwischenlager Container 11 aufnehmen, die Container 11 zur Be- und Entladestrecke 6 transportieren und dort auf dem fahrenden Schienenfahrzeug absetzen. Die im zweiten Kreis 5 bewegten Greifeinrichtungen 10 müssen im Ausführungsbeispiel vor dem Einfahren und vor dem Ausfahren in bzw. aus der Be- und Entladestrecke 6 den Fahrweg des Schienenfahrzeugs queren. Dazu wird der zweite Kreis 5 nach dem Verlassen des Zwischenlagers 2 und vor dem Verlassen der Be- und Entladestrecke 6 in einer Höhe geführt, die ein gefahrloses Queren des Fahrwegs des Schienenfahrzeugs ermöglicht Nach dem Queren des Fahrwegs wird der zweite Kreis 5 dann wieder nach unten geführt in eine Position, in der ein Absetzen der Container 11 auf dem Schienenfahrzeug möglich ist bzw. im Zwischenlager 2 neue Container 11 von den Greifeinrichtungen 10 aufgenommen werden können.

Der erste Kreis 4, der den Fahrweg des Schienenfahrzeugs nicht queren muss, kann im Wesentlichen in einer Ebene liegen.

Die leeren Greifeinrichtungen 10 des ersten Kreises 4 und die mit Containern 11 beladenen Greifeinrichtungen 10 des zweiten Kreises 5 fahren vom Zwischenlager 2 in den Synchronisierungsabschnitt 7 ein, in dem die Greifeinrichtungen 10 ihre Geschwindigkeit mit der Geschwindigkeit des Schienenfahrzeugs, das die Be- und Entladestrecke 6 mit gleichbleibender Geschwindigkeit durchfährt, synchronisieren, das heißt, die Greifeinrichtungen 10 auf die Geschwindigkeit des Schienenfahrzeugs beschleunigen oder abbremsen. In dem Synchronisierungsabschnitt 7 werden die Greifeinrichtungen 10 des ersten und zweiten Kreises 4, 5 parallel zum Schienenfahrzeug geführt.

An den Synchronisierungsabschnitt 7 schließt sich eine Entladeabschnitt 8 an, in dem der erste Kreis 4 quer zur Fahrtrichtung des Schienenfahrzeugs ausgelenkt wird, wodurch die Greifeinrichtungen 10 des ersten Kreises 4 über die auf dem Schienenfahrzeug mitgeführten Container 11 bewegt werden. Das Auslenken des ersten Kreises 4 wird durch einen Versatz der Träger 12, die die Laufschienen 13 und 14 für den ersten und den zweiten Kreis 4, 5 halten, relativ zu den Schienen für das Schienenfahrzeug bewirkt. In dem Entladeabschnitt 8 können die Greifeinrichtungen 10 des ersten Kreises 4 Container greifen und vom Schienenfahrzeug abnehmen.

An den Entladeabschnitt 8 schließt sich der Beladeabschnitt 9 an, in dem die Greifeinrichtungen 10 des zweiten Kreises 5 die im Zwischenlager 2 aufgenommenen Container 11 auf dem Schienenfahrzeug absetzen können. Anschließend folgt ein weiterer Streckenabschnitt der Be- und Entladestrecke 6 in dem die Greifeinrichtungen 10 des ersten Kreises 4 mit den vom Schienenfahrzeug abgenommenen Containern 11 und die leeren Greifeinrichtungen des zweiten Kreises 5 parallel zum Schienenfahrzeug geführt werden, bevor sie zurück zum Zwischenlager 2 geführt werden.

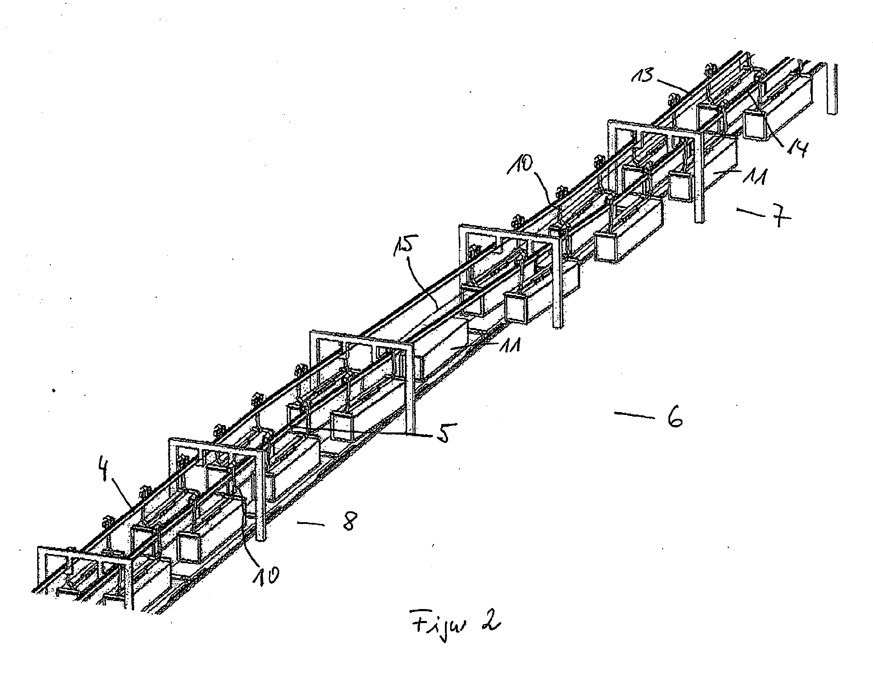

Die Figur 2 zeigt einen Ausschnitt der Be- und Entladestrecke in dem die Container 11 gerade umgeschlagen werden. Am oberen Rand der Figur 2 ist zu sehen, dass der erste Kreis 4 sich in einer Position befindet, in der die Greifeinrichtungen 10 die auf dem Schienenfahrzeug befindlichen Container 11 greifen kann. Der zweite Kreis 5 führt die Greifeinrichtungen 10 mit den vom Zwischenlager 2 mitgeführten Containern 11 parallel zum Schienenfahrzeug. Am unteren Rand befindet sich der zweite Kreis 5 in einer Position, in der die im Zwischenlager 2 aufgenommenen Container 11 auf dem Schienenfahrzeug abgesetzt werden können, während die bereits vom Schienenfahrzeug abgenommenen Container 11 mit den Greifeinrichtungen 10 des ersten Kreises 4 jetzt parallel zu dem Schienenfahrzeug geführt werden.

Die Figur 2 zeigt deutlich den Versatz der Träger 12 für die Laufschienen 13, 14 des ersten und des zweiten Kreises 4, 5 relativ zum Gleis. Weiterhin ist der Fahrdraht 15 zu sehen, der das Schienenfahrzeug, zum Beispiel einen durch eine E-Lok gezogenen Güterzug, mit Strom versorgt. Weiterhin ist gezeigt, dass nicht jeder Container 11 vom Schienenfahrzeug abgenommen werden muss, sondern einzelne Container 11, hier der in der Mitte der Figur 2, die Be- und Entladestrecke 6 durchfahren, ohne vom Schienenfahrzeug abgenommen zu werden.

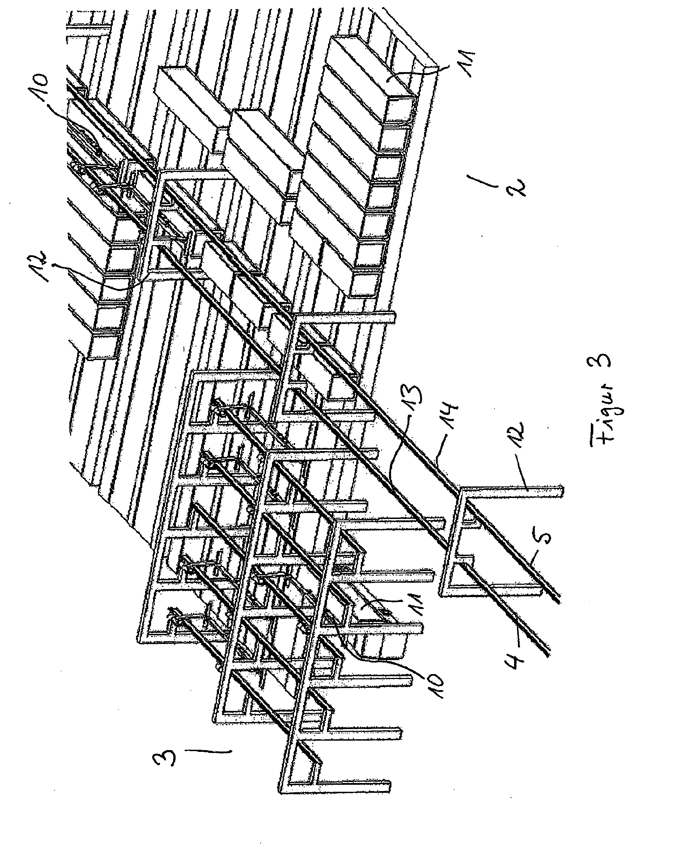

Die Figur 3 zeigt einen Teil des Zwischenlagers 2 mit einem LKW-Terminal 3 in dem Container 11 von Straßenfahrzeugen entnommen oder auf Straßenfahrzeuge geladen werden können. Im Zwischenlager 2 können die Container 11 gelagert und sortiert werden. Wenn ein Schienenfahrzeug auf das zentrale Modul 1 zufährt, werden im Zwischenlager 2 die Container 11, die auf das herannahende Schienenfahrzeug verladen werden sollen, aus einer Lagerposition abgeholt und einer Bereitstellungsposition zugeführt. Die Zusammenstellung der Container 11 wird dem Zwischenlager 2 zum Beispiel durch ein zentrales Containermanagementsystem mitgeteilt, so dass genau bekannt ist, welcher Container 11 an welcher Position des zusammenzustellenden Containerzugs platziert werden muss und wo Lücken sind, weil an dieser Stelle kein Container 11 vom Schienenfahrzeug abgenommen werden muss.

In der Bereitstellungsposition können die Greifeinrichtungen 10 des ersten Kreises 4 die Container greifen, wie in der Figur 3 gezeigt. Nicht gezeigt ist, dass die im zweiten Kreis 5 in das Zwischenlager 2 gebrachten Container 11 in Abgabepositionen, die neben der Bereitstellungspositionen für den ersten Kreis 4 liegen, abgestellt werden und von dort in das Lager 2 einsortiert oder über das LKW-Terminal 3 an ein Straßenfahrzeug übergeben werden. LKW-Terminals 3 befinden sich an den beiden Enden des Zwischenlagers 2 in die die Kreise 4, 5 in das Zwischenlager 2 ein- bzw. aus dem Zwischenlager 2 auslaufen. Die Container 11 können hier auf die Straßenfahrzeuge geladen werden oder von den Straßenfahrzeugen ins Lager 2 transportiert werden, ohne dass die Container 11 um ihre Hochachse gedreht werden müssen, was den Transport vereinfacht.

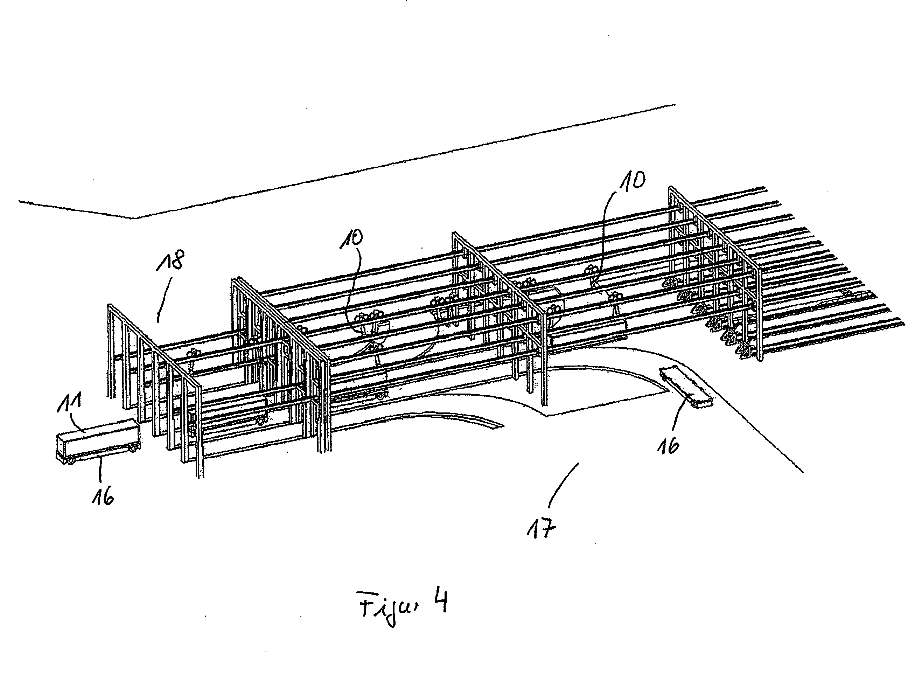

Die Figur 4 zeigt ein Modul der Umschlagseinrichtung für einen Hafen. Die Container 11 werden von nicht gezeigten Kränen von den im Hafen liegenden Schiffen entladen und auf selbstfahrenden Untersätze 16 gesetzt, die die Container 11 zu dem Hafenterminal 17 transportieren. Dort werden die Container 11 von Greifeinrichtungen 10 von den Untersätzen 16 entnommen und auf einem Schienenfahrzeug abgesetzt. Die selbstfahrenden Untersätze 16 fahren zurück und übernehmen einen weiteren Container 11 von einem Hafenkran. Zum Entladen eines Schienenfahrzeugs und Beladen eines Schiffs werden die Container 11 durch die Greifeinrichtungen 10 vom Schienenfahrzeug genommen und auf den selbstfahrenden Untersätze 16 abgesetzt.

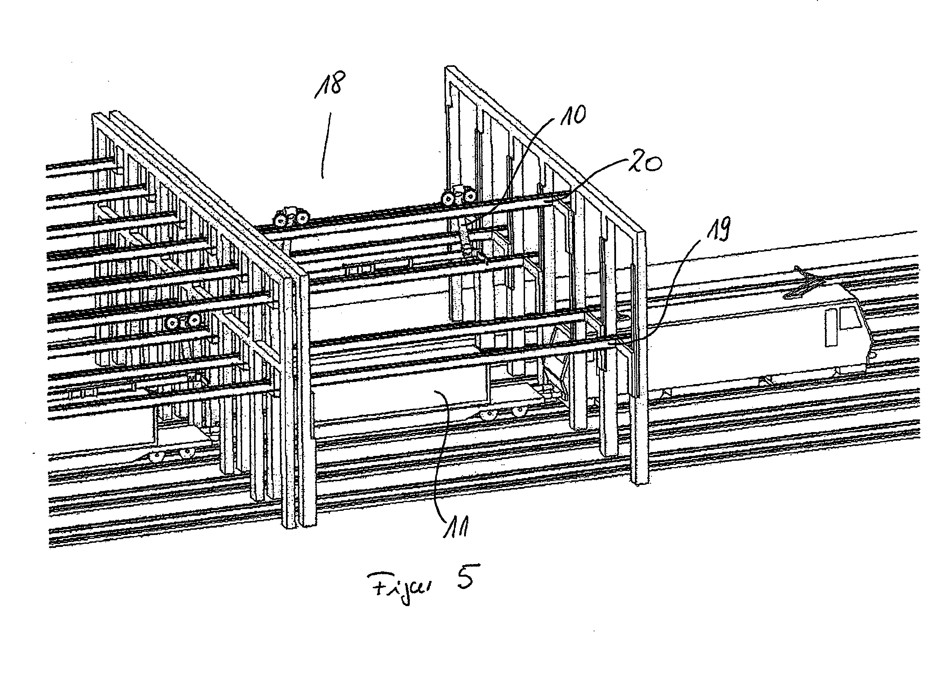

Die Figur 5 zeigt einen Elevator 18 am Ende eines Hafenterminals 17, in dem die Greifeinrichtungen 10 nach dem Absetzen des Containers 11 auf dem Schienenfahrzeug aus der Zulieferebene 19 in eine Rückführungsebene 20 gehoben werden können. In der Rückführungsebene 20 werden die Greifeinrichtungen 10 zurück zum Anfang des Hafenterminals 17 geführt, wo sie durch einen weiteren Elevator 18, der in der Figur 4 gezeigt ist, wieder in die Zuführungsebene 19 gesenkt werden. Der Transport der Greifeinrichtungen 11 erfolgt in umgekehrter Richtung, wenn das Schienenfahrzeug entladen werden soll.

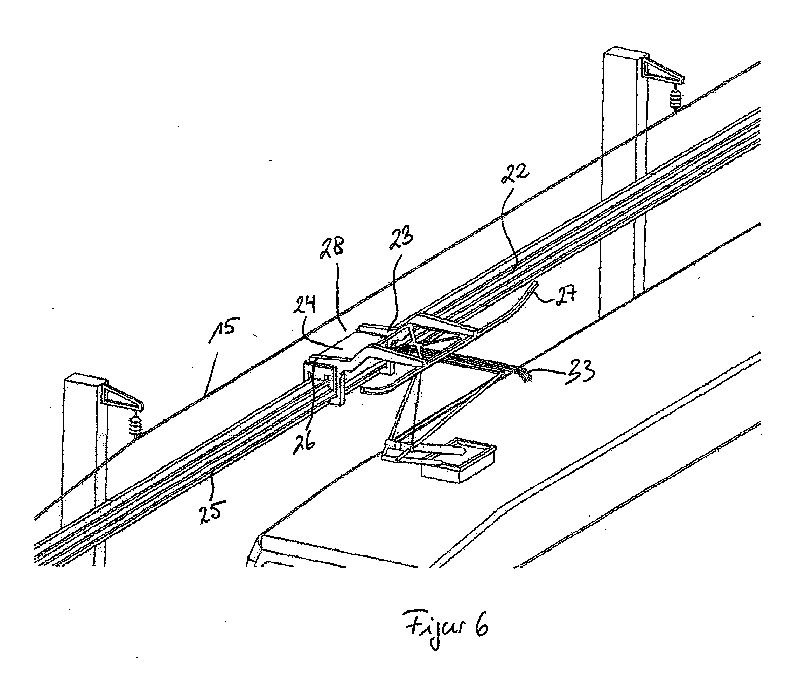

Die Figur 6 zeigt ein Trolley-System 21 mit dem der Stromabnehmer 33 eines Schienenfahrzeugs mit einem verlegten Fahrdraht 15 verbunden wird. Um zu vermeiden, dass beim Abnehmen oder Aufsetzen von Containern 11 mit den Greifeinrichtungen 10 der Fahrdraht 15 in Berührung mit der Greifeinrichtung 10 kommt, kann der Fahrdraht 15 neben das Schienenfahrzeug verlegt werden. Um dennoch das Schienenfahrzeug mit Strom versorgen zu können, wird der Stromabnehmer 33 des Schienenfahrzeugs über das Trolley-System 21 mit dem Fahrdraht verbunden. Das Trolley-System 21 besteht aus einer Laufschiene 22 für den Trolleykörper 23, einem Antrieb 24, der mit dem Trolleykörper 23 verbunden ist und den Trolleykörper 23 entlang der Laufschiene 22 beschleunigen und abbremsen kann. Der Trolleyköper 23 und der Antrieb 24 bilden gemeinsam den Trolley 28. Der Antrieb 24 wird über eine Stromschiene 25 mit Strom versorgt. Der Trolleykörper 23 weist ein erstes Ende 26 auf, dass mit dem Antrieb 24 verbunden ist, und ein zweites Ende 27, das mit dem Stromabnehmer 33 zusammenwirkt

Der Trolley 28 wartet am Anfang der Be- und Entladestrecke 6 auf eine herannahendes Schienenfahrzeug, wobei der Trolley 28 bereits in der Warteposition mit dem Fahrdraht 15 in Verbindung ist, der Fahrdraht 15 zum Beispiel auf der Oberfläche des Trolleys 28 nahe dem zweiten Ende 27 liegt. Nähert sich das Schienenfahrzeug, synchronisiert sich der Trolley 28 in der Synchronisierungsstrecke 7 auf die Geschwindigkeit des Schienenfahrzeugs, so dass das bügelförmige zweite Ende 27 des Trolleykörpers 23 mit dem Stromabnehmer 33 des Schienenfahrzeugs in Kontakt kommt. Beim Durchfahren der Synchronisierungsstrecke 7 wird der Fahrdraht 15 aus seiner Position zentral über dem Schienenfahrzeug in eine Position neben dem Schienenfahrzeug verlegt, wobei der Fahrdraht 15 dabei auf der Oberfläche des Trolleykörpers 23 vom zweiten Ende 27 hin zum ersten Ende 26 verschoben wird. Dabei besteht zu jeder Zeit Kontakt zwischen der Oberfläche des Trolleykörpers 23 und dem Fahrdraht 15. Der Trolleykörper 23 besteht zumindest teilweise aus einem leitenden Material, so dass der Strom von dem Fahrdraht 15 über den Trolleykörper 23 zum Stromabnehmer 33 des Schienenfahrzeugs geleitet werden kann. Alternativ kann Trolley 28 einen Stromabnehmer aufweisen, auf dem der Fahrdraht 15 beim Durchfahren der Be- und Entladestrecke 6 aufliegt. Der Trolley 28 hält den Kontakt zwischen dem zweiten Trolleykörperende 27 bzw. einem nicht gezeigten Stromabnehmer der an dem Trolley 28 gebildet ist und dem Stromabnehmer 33 bis ans Ende des Beladeabschnitts 9. Danach wird die Stromleitung 15 wieder zurück über die Mitte des Gleises für das Schienenfahrzeug gelenkt und der Trolley 28 abgebremst. Dieser fährt zurück in seine Ausgangsposition, wo er auf das nächste Schienenfahrzeug wartet.

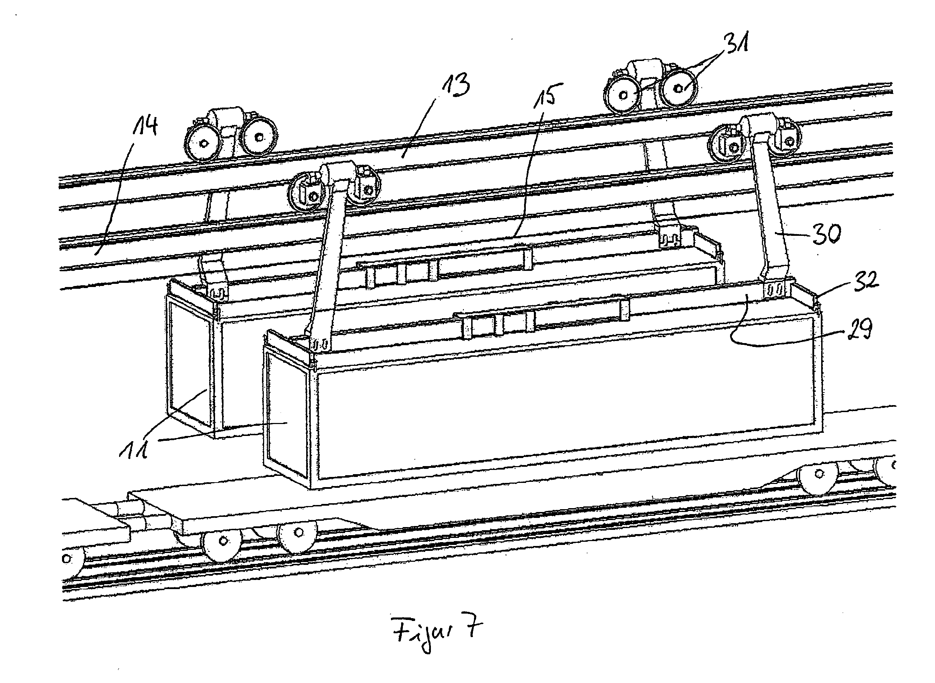

Die Figur 7 zeigt ein Ausführungsbeispiel einer Greifeinrichtung 10 mit einem angehängten Container 11. Die Greifeinrichtung 10 besteht im Wesentlichen aus einem teleskopierbaren zentralen Längsbalken 29 der an beiden Enden über Verbindungselemente 30 mit einer angetriebenen Laufvorrichtung 31 verbunden ist, die die Greifeinrichtung 10 auf der Laufschiene 13, 14 bewegen kann. Dazu weist die Laufvorrichtung 31 einen Motor, zum Beispiel einen Elektromotor auf, der über die Laufschiene 13, 14 oder eine separate Stromschiene, die mit der Laufschiene 13, 14 verbunden ist, mit Energie versorgt wird. Die beiden Laufvorrichtungen 31 können relativ zueinander bewegt werden, so dass die Länge des Längsbalkens 29 an unterschiedliche Containerlängen angepasst werden kann.

Der Längsbalken 29 nimmt auftretende Biegemomente auf, so dass diese nicht auf die Laufschienen 13, 14 des ersten bzw. zweiten Kreise übertragen werden. Die Greifeinrichtung 10 weist weiterhin an den Enden des Längsbalkens 29 quer zum Längsbalken 29 ausgerichtete Tragebalken 32 auf, an deren Enden sich verschwenkbare Verriegelungsmechanismen zur Fixierung der Container an der Greifeinrichtung 10 befinden.

Die Tragebalken 32 können weiterhin Rollen aufweisen, die seitwärts vom Containerkörper abstehen und mit in der Be- und Entladestrecke 6 fest installierten starren Leitblechen zusammenwirken, um die Container 11 mit den Greifeinrichtungen 10 zu zentrieren und durch Wind oder andere Umstände hervorgerufenen Schwingungen der Container 11 weitestgehend zu dämpfen.

### Bezugszeichenliste

- 1: zentrales Modul
- 2: Zwischenlager
- 3: LKW-Terminal
- 4: erster Kreis
- 5: zweiter Kreis
- 6: Be- und Entladestrecke
- 7: Synchronisierungsabschnitt
- 8: Entladeabschnitt
- 9: Beladeabschnitt
- 10: Greifeinrichtung
- 11: Container
- 12: Halter
- 13: Laufschiene erster Kreis
- 14: Laufschiene zweiter Kreis
- 15: Fahrdraht
- 16: Untersatz
- 17: Hafenterminal
- 18: Elevator
- 19: Zulieferebene
- 20: Rückführungsebene
- 21: Trolley-System
- 22: Laufschiene für Trolley
- 23: Trolleykörper
- 24: Trolley-Antrieb
- 25: Stromschiene
- 26: erstes Ende Trolley
- 27: zweites Ende Trolley
- 28: Trolley
- 29: Längsbalken
- 30: Verbindungselement
- 31: Laufvorrichtung
- 32: Tragbalken
- 33: Stromabnehmer

## Patentansprüche

1. Modulare Container Umschlag Einrichtung aufweisend:
a) wenigstens ein zentrales Modul (1) zum Umschlagen von Containern (11) auf Schienenfahrzeugen, beispielsweise Güterzügen, mit einem Zwischenlager (2) für die Container (11) und einer Be- und Entladestrecke (6), in der die Container (11) bei fahrendem Schienenfahrzeug vom Schienenfahrzeuge entnommen und auf dem Schienenfahrzeug abgesetzt werden, und
b) optional ein Modul, zum Umladen von Containern. von Schiffen und/oder ein Modul zum Umladen von Containern von Flugzeugen auf ein Schienenfahrzeug, zum Transport der Container (11) in das bzw. aus dem Zwischenlager (2) oder zum Umschlagen der auf das Schienenfahrzeug verladenen Container (11) in der Be- und Entladestrecke (6) des zentralen Moduls (1), und
c) einem Modul (3) zum Umladen der Container (11) von dem Zwischenlager (2) auf Straßenfahrzeuge, et vice versa,
**dadurch gekennzeichnet, dass**
d) die Be- und Entladestrecke (6) Teil eines Zweikreissystems ist, mit einem ersten Kreis (4), der vom Zwischenlager (2) über die Be- und Entladestrecke (6) zurück in das Zwischenlager (2) führt und in dem Container (11) mittels angetriebener Greifeinrichtungen (10) von dem fahrenden Schienenfahrzeug von einer Seite abnehmbar sind, und einem zweiten Kreis (5), der vom Zwischenlager (2) über die Be- und Entladestrecke (6) zurück in das Zwischenlager (2) führt und in dem Container (11) mittels angetriebener Greifeinrichtungen (10) an einer der einen Seite bezüglich der Schienenfahrzeuglängsachse gegenüberliegenden anderen Seite auf dem fahrenden Schienenfahrzeug absetzbar sind.

2. Modulare Einrichtung nach Anspruch 1, wobei die Greifeinrichtungen (10) des ersten Kreises (4) leer im ersten Kreis (4) neben das fahrende Schienenfahrzeug bewegbar sind und ihre Bewegung mit der Bewegung des Schienenfahrzeugs synchronisieren, so dass sich die Greifeinrichtungen (10) neben vom Schienenfahrzeug zu entnehmenden Containern (11) in einer Synchronposition in gleicher Geschwindigkeit und in gleiche Richtung wie das Schienenfahrzeug bewegen.

3. Modulare Einrichtung nach einem der zwei vorgehenden Ansprüche, wobei die Greifeinrichtungen (10) des zweiten Kreises (5) Container (11) in dem Zwischenlager (2) übernehmen und im zweiten Kreis (5) neben das fahrende Schienenfahrzeug bewegbar sind und ihre Bewegung mit der Bewegung des Schienenfahrzeugs synchronisieren, so dass sich die Greifeinrichtungen (10) parallel zu vorgesehenen Absetzplätzen für den getragenen Container (11) auf dem Schienenfahrzeug in einer Synchronposition in gleicher Geschwindigkeit und in gleiche Richtung wie das Schienenfahrzeug bewegen.

4. Modulare Einrichtung nach einem der drei vorgehenden Ansprüche, wobei eine leere Greifeinrichtung (10) des ersten Kreises (4) aus der Synchronposition quer zum Schienenfahrzeug in eine Greifposition, in der sie den Container (11) greift, und aus der Greifposition mit dem gegriffenen Container (11) zurück in seine Synchronposition bewegbar ist, so dass der Container (11) jetzt gehalten von der Greifeinrichtung (10) des ersten Kreises (4) neben einem leeren Platz auf dem Schienenfahrzeug geführt wird.

5. Modulare Einrichtung nach einem der vier vorgehenden Ansprüche, wobei eine Greifeinrichtung (10) des zweiten Kreises (5) aus seiner Synchronposition quer zum Schienenfahrzeug in eine Absetzposition, in der sie den Container (11) auf einen leeren Platz auf dem Schienenfahrzeug absetzt, und aus der Absetzposition leer zurück in seine Synchronposition bewegbar ist.

6. Modulare Einrichtung nach einem der vorgehenden fünf Ansprüche, wobei die Greifeinrichtungen (10) hergerichtet sind, um Container (11) von dem Schienenfahrzeug abzuheben bzw. auf dem Schienenfahrzeug abzusetzen und vorzugsweise an der Absetzposition in Längs- und/oder Querrichtung zu positionieren.

7. Modulare Einrichtung nach einem der vorgehenden sechs Ansprüche, wobei die Greifeinrichtungen (10) des ersten und/oder des zweiten Kreises (4, 5) sich vor Erreichen der Be- und Entladestrecke und nach Verlassen der Be- und Entladestrecke in einer ersten Ebene bewegen, die von einer zweiten Ebene, in der die Greifeinrichtungen (10) sich in der Be- und Entladestrecke befinden, verschieden ist, so dass die Greifeinrichtungen (10) vor Erreichen und nach Verlassen der Be- und Entladestrecke den Weg des Schienenfahrzeugs kreuzen können.

8. Modulare Einrichtung nach einem der vorgehenden Ansprüche, wobei wenigstens in der Be- und Entladestrecke ein Fahrdraht (15) für das Schienenfahrzeug, zum Beispiel eine E-Lok, von der Mitte über den Gleisen nach außen versetzbar ist, um Freiraum für die Greifeinrichtungen (10) zu schaffen, wobei der Fahrdraht (15) bevorzugt zum Greifen der Container (11) mit einer Greifeinrichtung (10) des ersten Kreises (4) von dem Schienenfahrzeug in eine Richtung bewegbar ist, die der Richtung seines Versatzes zum Absetzen der Container (11) des zweiten Kreises (5) auf dem Schienenfahrzeug entgegengesetzt ist.

9. Modulare Einrichtung nach Anspruch 8, wobei im Bereich der Be- und Entladestrecke (6) der Fahrdraht (15) für das Schienenfahrzeug seitlich neben der Be- und Entladestrecke (6) verläuft und der Stromabnehmer (22) der E-Lok über ein Trolley-System (21) mit der Stromleitung (15) verbunden ist.

10. Modulare Einrichtung nach dem vorgehenden Anspruch, wobei das Trolley-System (21) einen angetriebenen Trolley (28) umfasst, der sich zu dem Stromabnehmer (22) der E-Lok synchronisiert, so dass sich beide mit der gleichen Geschwindigkeit in die gleiche Richtung bewegen und der Trolley (28) den Fahrdraht (15) mit dem Stromabnehmer (22) der E-Lok verbindet.

11. Verfahren zum Be- und Entladen eines fahrenden Schienenfahrzeugs bevorzugt in einer modularen Einrichtung nach einem der Ansprüche 1 bis 10, bei dem
a) angetriebene leere Greifeinrichtungen (10) entlang einer Be- und Entladestrecke (6) parallel zu dem fahrenden Schienenfahrzeug geführt und neben einen vom Schienenfahrzeug abzunehmenden Container (11) bewegt werden, und die Geschwindigkeit der leeren Greifeinrichtungen (10) mit der Geschwindigkeit des Schienenfahrzeuges synchronisiert wird,
b) angetriebene einen Container (11) tragende Greifeinrichtungen (10) entlang der Be- und Entladestrecke (6) parallel zu dem fahrenden Schienenfahrzeug geführt und neben einen vom Schienenfahrzeug abzunehmenden Container (11) oder neben eine leere Containeraufnahmeposition bewegt werden, und die Geschwindigkeit der den Container (11) tragenden Greifeinrichtungen (10) mit der Geschwindigkeit des Schienenfahrzeuges synchronisiert wird,
c) die leere Greifeinrichtung (10) des Merkmals a) quer zur Fahrtrichtung des Schienenfahrzeugs über den Container (11) bewegt, der Container (11) von der Greifeinrichtung (10) gegriffen und anschließend die Greifeinrichtung (10) mit dem Container (11) quer zur Fahrtrichtung des Schienenfahrzeugs zurück in seine Ausgangsposition bewegt wird,
d) die den Container (11) tragende Greifeinrichtung (10) des Merkmals b) quer zur Fahrtrichtung des Schienenfahrzeugs über eine leere Containeraufnahmeposition auf dem Schienenfahrzeug bewegt, der Container (11) auf dem Schienenfahrzeug abgesetzt und von der Greifeinrichtung (10) getrennt wird und die Greifeinrichtung (10) quer zur Fahrtrichtung des Schienenfahrzeugs zurück in seine Ausgangsposition bewegt wird.

12. Verfahren nach dem vorgehenden Anspruch, wobei in dem ersten Kreis (4) die leeren Greifeinrichtungen (10) zur Aufnahme der Container (11) vom Schienenfahrzeug von einem Zwischenlager (2) in die Be- und Entladestrecke (6) auf einer Seite des Schienenfahrzeuges geführt und nach der Aufnahme der Container (11) zurück ins Zwischenlager (2) geführt werden und in dem zweiten Kreis (5) die mit Containern (11) beladenen Greifeinrichtungen (10) zum Absetzen der Container (11) auf dem Schienenfahrzeug, von dem Zwischenlager (2) in die Be- und Entladestrecke (6) auf einer anderen Seite des Schienenfahrzeuges geführt und nach dem Absetzen der Container (11) leer zurück ins Zwischenlager geführt werden.

13. Verfahren nach dem vorgehenden Anspruch, wobei beim Ein- und Ausfahren in bzw. aus der Be- und Entladestrecke (6) die Greifeinrichtungen (10) des ersten und/oder des zweiten Kreises (4, 5) so geführt werden, dass sie die Fahrtrichtung des Schienenfahrzeugs queren.

## Claims

1. A modular container handling facility, comprising:
a) at least one central module (1) for handling containers (11) on rail vehicles, for example goods trains, comprising an intermediate storage facility (2) for the containers (11) and a loading and unloading section (6) in which the containers (11) are removed from and deposited on moving rail vehicles and
b) optionally a module for transferring containers from ships and/or a module for transferring containers from aeroplanes onto a rail vehicle, for transporting the containers (11) into or out of the intermediate storage facility (2) or for handling the containers (11) loaded onto the rail vehicle in the loading and unloading section (6) of the central module (1), and
c) a module (3) for transferring the containers (11) from the intermediate storage facility (2) onto road vehicles and vice versa, **characterised in that**
d) the loading and unloading section (6) is part of a dual-circuit system comprising a first circuit (4), which leads from the intermediate storage facility (2) to the loading and unloading section (6) and back to the intermediate storage facility (2) and in which containers (11) can be taken from the moving rail vehicle from one side by means of driven grabbers (10), and a second circuit (5) which leads from the intermediate storage facility (2) to the loading and unloading section (6) and back to the intermediate storage facility (2) and in which containers (11) can be deposited on the moving rail vehicle on another side which is opposite the first side in relation to the longitudinal axis of the rail vehicle, by means of driven grabbers (10).

2. The modular facility according to Claim 1, wherein the grabbers (10) of the first circuit (4) can be moved, empty, alongside the moving rail vehicle in the first circuit (4) and synchronise their movement with the movement of the rail vehicle, such that the grabbers (10) move alongside containers (11) to be removed from the rail vehicle in a synchronous position, at the same speed and in the same direction as the rail vehicle.

3. The modular facility according to any one of the preceding two claims, wherein the grabbers (10) of the second circuit (5) pick up containers (11) in the intermediate storage facility (2) and can be moved alongside the moving rail vehicle in the second circuit (5) and synchronise their movement with the movement of the rail vehicle, such that the grabbers (10) move parallel to designated depositing spaces for the borne container (11) on the rail vehicle in a synchronous position, at the same speed and in the same direction as the rail vehicle.

4. The modular facility according to any one of the preceding three claims, wherein an empty grabber (10) of the first circuit (4) can be moved from the synchronous position, transverse to the rail vehicle, into a grabbing position in which it grabs the container (11) and can be moved, together with the container (11) which it has grabbed, from the grabbing position back into its synchronous position, such that the container (11) is then guided, held by the grabber (10) of the first circuit (4), alongside an empty space on the rail vehicle.

5. The modular facility according to any one of the preceding four claims, wherein a grabber (10) of the second circuit (5) can be moved from its synchronous position, transverse to the rail vehicle, into a depositing position in which it deposits the container (11) onto an empty space on the rail vehicle and can be moved, empty, from the depositing position back into its synchronous position.

6. The modular facility according to any one of the preceding five claims, wherein the grabbers (10) are configured to lift containers (11) from the rail vehicle and deposit them on the rail vehicle, respectively, and preferably to position them in the longitudinal and/or transverse direction at the depositing position.

7. The modular facility according to any one of the preceding six claims, wherein the grabbers (10) of the first and/or second circuit (4, 5) move in a first plane before they reach the loading and unloading section and after they have left the loading and unloading section and wherein the first plane is different from a second plane in which the grabbers (10) move in the loading and unloading section, such that the grabbers (10) can cross the path of the rail vehicle before reaching and after leaving the loading and unloading section.

8. The modular facility according to any one of the preceding claims, wherein at least in the loading and unloading section, an overhead wire (15) for the rail vehicle, for example an electric locomotive, can be offset outwards from the middle, over the tracks, in order to create free space for the grabbers (10), wherein the overhead wire (15) can preferably be moved in a direction opposite to the direction in which it is offset for depositing the containers (11) on the rail vehicle using a grabber (10) of the second circuit (5), in order to grab the containers (11) from the rail vehicle using a grabber (10) of the first circuit (4).

9. The modular facility according to Claim 8, wherein in the region of the loading and unloading section (6), the overhead wire (15) for the rail vehicle extends laterally alongside the loading and unloading section (6), and the pantograph (22) of the electric locomotive is connected to the power line (15) via a trolley system (21).

10. The modular facility according to the preceding claim, wherein the trolley system (21) comprises a driven trolley (28) which is synchronised to the pantograph (22) of the electric locomotive, such that the two move at the same speed in the same direction and the trolley (28) connects the overhead wire (15) to the pantograph (22) of the electric locomotive.

11. A method for loading and unloading a moving rail vehicle in a modular facility according to any one of Claims 1 to 10, wherein:
a) driven, empty grabbers (10) are guided parallel to the moving rail vehicle along a loading and unloading section (6) and are moved alongside a container (11) to be taken from the rail vehicle, and the speed of the empty grabbers (10) is synchronised with the speed of the rail vehicle;
b) driven grabbers (10) bearing a container (11) are guided parallel to the moving rail vehicle along the loading and unloading section (6) and are moved alongside a container (11) to be taken from the rail vehicle or alongside an empty container receiving position, and the speed of the grabbers (10) bearing the container (11) is synchronised with the speed of the rail vehicle;
c) the empty grabber (10) of Feature a) is moved transverse to the movement direction of the rail vehicle, over the container (11), the container (11) is grabbed by the grabber (10), and the grabber (10) is then moved together with the container (11) transverse to the movement direction of the rail vehicle, back into its initial position;
d) the grabber (10) of Feature b) bearing the container (11) is moved transverse to the movement direction of the rail vehicle, over an empty container receiving position on the rail vehicle, the container (11) is deposited on the rail vehicle and separated from the grabber (10), and the grabber (10) is moved transverse to the movement direction of the rail vehicle, back into its initial position.

12. The method according to the preceding claim, wherein in the first circuit (4), the empty grabbers (10) are guided from an intermediate storage facility (2) to the loading and unloading section (6) on one side of the rail vehicle in order to receive the containers (11) from the rail vehicle and, after they have received the containers (11), are guided back to the intermediate storage facility (2), and in the second circuit (5), the grabbers (10) loaded with containers (11) are guided from the intermediate storage facility (2) to the loading and unloading section (6) on another side of the rail vehicle in order to deposit the containers (11) on the rail vehicle and, after they have deposited the containers (11), are guided back, empty, to the intermediate storage facility.

13. The method according to the preceding claim, wherein the grabbers (10) of the first and/or second circuit (4, 5) are guided, as they enter and exit the loading and unloading section (6), respectively, such that they cross the movement direction of the rail vehicle.

## Revendications

1. Dispositif modulaire de transfert de conteneurs comportant :
a) au moins un module central (1) pour transférer des conteneurs (11) sur des véhicules ferroviaires, par exemple des marchandises, comportant un entrepôt intermédiaire (2) pour les conteneurs (11) et un tronçon de chargement et de déchargement (6), dans lequel les conteneurs (11) sont retirés des véhicules ferroviaires et sont déposés sur un véhicule ferroviaire pendant que le véhicule ferroviaire est en mouvement et
b) facultativement un module pour transborder des conteneurs de bateaux et/ou un module pour transborder des conteneurs d'avions sur un véhicule ferroviaire, pour transporter les conteneurs (11) dans ou depuis l'entrepôt intermédiaire (2) ou pour transférer les conteneurs chargés sur le véhicule ferroviaire (11) dans le tronçon de chargement et de déchargement (6) du module central (1) et
c) un module (3) pour transborder les conteneurs (11) à partir de l'entrepôt intermédiaire (2) sur des véhicules routiers, et vice versa, **caractérisé en ce que**
d) le tronçon de chargement et de déchargement (6) est un système à deux circuits comportant un premier circuit (4) qui mène de l'entrepôt intermédiaire (2) via le tronçon de chargement et de déchargement (6) de nouveau dans l'entrepôt intermédiaire (2) et dans lequel des conteneurs (11) peuvent être retirés du véhicule ferroviaire en mouvement à partir d'un côté au moyen de dispositifs de préhension entraînés (10), et un second circuit (5) qui mène de l'entrepôt intermédiaire (2) via le tronçon de chargement et de déchargement (6) de nouveau dans l'entrepôt intermédiaire (2) et dans lequel des conteneurs (11) peuvent être déposés sur le véhicule ferroviaire en mouvement sur un autre côté opposé au premier côté par rapport à l'axe longitudinal du véhicule ferroviaire au moyen de dispositifs de préhension entraînés (10) .

2. Dispositif modulaire selon la revendication 1, dans lequel les dispositifs de préhension (10) du premier circuit (4) peuvent se déplacer à vide à côté du véhicule ferroviaire en mouvement et leur mouvement est synchronisé avec le mouvement du véhicule ferroviaire, de telle sorte que les dispositifs de préhension (10) se déplacent à côté du véhicule ferroviaire jusqu'aux conteneurs à prélever (11) dans une position de synchronisation, à la même vitesse et dans la même direction que le véhicule ferroviaire.

3. Dispositif modulaire selon l'une des deux revendications précédentes, dans lequel les dispositifs de préhension (10) du second circuit (5) réceptionnent des conteneurs (11) dans l'entrepôt intermédiaire (2) et peuvent se déplacer dans le second circuit (5) à côté du véhicule ferroviaire en mouvement et leur mouvement est synchronisé avec le mouvement du véhicule ferroviaire de telle sorte que les dispositifs de préhension (10) se déplacent sur le véhicule ferroviaire parallèlement à des emplacements de dépose prévus pour le conteneur porté (11) dans une position de synchronisation, à la même vitesse et dans la même direction que le véhicule ferroviaire.

4. Dispositif modulaire selon l'une des trois revendications précédentes, dans lequel le dispositif de préhension vide (10) du premier circuit (4) peut se déplacer à partir de la position de synchronisation transversalement au véhicule ferroviaire dans une position de préhension, dans laquelle il saisit le conteneur (11), et retourne dans sa position de synchronisation à partir de la position de préhension avec le conteneur (11) saisi, de telle sorte que le conteneur (11) est maintenant tenu par le dispositif de préhension (10) du premier circuit (4) à côté d'un emplacement vide sur le véhicule ferroviaire.

5. Dispositif modulaire selon l'une des quatre revendications précédentes, dans lequel un dispositif de préhension (10) du second circuit (5) peut se déplacer à partir de sa position de synchronisation transversalement au véhicule ferroviaire dans une position de dépose, dans laquelle il dépose le conteneur (11) sur un emplacement vide sur le véhicule ferroviaire, et retourne à vide à partir de la position de dépose dans sa position de synchronisation.

6. Dispositif modulaire selon l'une des cinq revendications précédentes, dans lequel les dispositifs de préhension (10) sont conçus de manière à soulever le conteneur (11) à partir du véhicule ferroviaire ou le déposer sur le véhicule ferroviaire et de préférence pour le positionner dans la position de dépose dans la direction longitudinale et/ou transversale.

7. Dispositif modulaire selon l'une des six revendications précédentes, dans lequel avant d'avoir atteint le tronçon de chargement et de déchargement et après avoir quitté le tronçon de chargement et de déchargement, les dispositifs de préhension (10) du premier et/ou du second circuit (4, 5) se déplacent dans un premier plan qui est différent d'un second plan dans lequel les dispositifs de préhension (10) se situent dans le tronçon de chargement et de déchargement, de telle sorte que les dispositifs de préhension (10) peuvent croiser la course du véhicule ferroviaire avant d'avoir atteint et après avoir quitté le tronçon de chargement et de déchargement.

8. Dispositif modulaire selon l'une des revendications précédentes, dans lequel une caténaire (15) pour le véhicule ferroviaire, par exemple une locomotive électrique, peut être décalée vers l'extérieur au moins dans le tronçon de chargement et de déchargement, à partir du centre au-dessus des voies afin de créer un espace libre pour les dispositifs de préhension (10), dans lequel la caténaire (15) peut de préférence se déplacer pour saisir le conteneur (11) avec un dispositif de préhension (10) du premier circuit (4) à partir du véhicule ferroviaire dans une direction qui est opposée à la direction de son déport pour déposer le conteneur (11) du second circuit (5) sur le véhicule ferroviaire.

9. Dispositif modulaire selon la revendication 8, dans lequel dans la zone du tronçon de chargement et de déchargement (6), la caténaire (15) pour le véhicule ferroviaire s'étend latéralement à côté du tronçon de chargement et de déchargement (6) et le pantographe (22) de la locomotive électrique est relié à la ligne électrique (15) par l'intermédiaire d'un système de chariot (21).

10. Dispositif modulaire selon la revendication précédente, dans lequel le système de chariot (21) inclut un chariot entraîné (28) qui se synchronise sur le pantographe (22) de la locomotive électrique, de telle sorte que les deux se déplacent à la même vitesse dans la même direction et le chariot (28) relie la caténaire (15) au pantographe (22) de la locomotive électrique.

11. Procédé de chargement et de déchargement d'un véhicule ferroviaire en mouvement dans un dispositif modulaire selon l'une des revendications 1 à 10, comportant les étapes consistant à :
a) guider des dispositifs de préhension vides entraînés (10) le long d'un tronçon de chargement et de déchargement (6) parallèlement au véhicule ferroviaire en mouvement et le mettre en mouvement à côté d'un conteneur (11) devant être reçu par le véhicule ferroviaire, et synchroniser la vitesse des dispositifs de préhension (10) vides avec la vitesse du véhicule ferroviaire,
b) guider des dispositifs de préhension entraînés (11) portant un conteneur (11) le long du tronçon de chargement et de déchargement (6) parallèlement au véhicule ferroviaire en mouvement et les mettre en mouvement à côté d'un conteneur (11) devant être reçu par le véhicule ferroviaire ou à côté d'une position de réception de conteneur vide, et synchroniser la vitesse des dispositifs de préhension (10) portant le conteneur (11) avec la vitesse du véhicule ferroviaire,
c) déplacer le dispositif de préhension vide (10) de la caractéristique a) transversalement à la direction de déplacement du véhicule ferroviaire au-dessus du conteneur (11), saisir le conteneur (11) avec le dispositif de préhension (10) et déplacer ensuite le dispositif de préhension (10) avec le conteneur (11) transversalement à la direction de déplacement du véhicule ferroviaire pour le ramener à sa position initiale,
d) déplacer le dispositif de préhension (10) portant le conteneur (11) de la caractéristique b) transversalement à la direction de déplacement du véhicule ferroviaire au-dessus d'une position de réception de conteneur vide sur le véhicule ferroviaire, déposer le conteneur (11) sur le véhicule ferroviaire et le séparer du dispositif de préhension (10), et déplacer le dispositif de préhension (10) transversalement à la direction de déplacement du véhicule ferroviaire pour le ramener à sa position initiale.

12. Procédé selon la revendication précédente, dans lequel, dans le premier circuit (4), les dispositifs de préhension (10) vides sont guidés sur un côté du véhicule ferroviaire pour recevoir le conteneur (11) du véhicule ferroviaire provenant d'un entrepôt intermédiaire (2) dans le tronçon de chargement et de déchargement (6), et après la réception du conteneur (11), pour retourner dans l'entrepôt intermédiaire (2) et, dans le second circuit (5), les dispositifs de préhension (10) chargés avec le conteneur (11) sont guidés sur un autre côté du véhicule ferroviaire pour déposer le conteneur (11) sur le véhicule ferroviaire provenant de l'entrepôt intermédiaire (2) dans le tronçon de chargement et de déchargement (6) et après la dépose du conteneur (11), sont guidés pour retourner à vide dans l'entrepôt intermédiaire.

13. Procédé selon la revendication précédente, dans lequel lors de la rentrée et de la sortie dans ou depuis le tronçon de chargement et de déchargement (6), les dispositifs de préhension (10) du premier et/ou du second circuit (4, 5) sont guidés de telle sorte qu'ils croisent la direction de déplacement du véhicule ferroviaire.
